# EUROPÄISCHE PATENTSCHRIFT

(11) **EP 4 430 739 B1**
(45) Veröffentlichungstag und Bekanntmachung des Hinweises auf die Patenterteilung: **15.01.2025**
(21) Anmeldenummer: 22838842.7
(22) Anmeldetag: 21.12.2022
(51) Int. Cl.: H02K 41/03, B65G 54/02

(54) **VERFAHREN ZUM BEARBEITEN EINES FLÄCHIGEN OBJEKTS MITTELS EINES PLANARANTRIEBSSYSTEMS**
METHOD FOR MACHINING A FLAT OBJECT BY MEANS OF A PLANAR DRIVE SYSTEM
PROCÉDÉ D'USINAGE D'UN OBJET PLAT AU MOYEN D'UN SYSTÈME D'ENTRAÎNEMENT PLAN

(30) Priorität: 23.12.2021 DE 102021134510
(43) Veröffentlichungstag der Anmeldung: 18.09.2024
(73) Patentinhaber: Beckhoff Automation GmbH, 33415 Verl (DE)
(72) Erfinder: BECKHOFF, Johannes, 33758 Schloß Holte-Stukenbrock (DE); SCHULTE, Felix, 33397 Rietberg (DE)
(74) Vertreter: Patentanwaltskanzlei WILHELM & BECK
(86) Internationale Anmeldenummer: PCT/EP2022/087192
(87) Internationale Veröffentlichungsnummer: WO 2023/118269

(56) Entgegenhaltungen:
- DE-A1- 102018 129 731
- DE-A1- 102019 117 431
- US-B2- 7 886 956

## Beschreibung

Die Erfindung betrifft ein Verfahren zum Bearbeiten eines flächigen Objekts mittels eines Planarantriebssystems sowie ein Planarantriebssystem.

Diese Patentanmeldung beansprucht die Priorität der deutschen Patentanmeldung DE 10 2021 134 510.3, eingereicht am 23.12.2021.

Planarantriebssysteme können unter anderem in der Automatisierungstechnik, insbesondere der Fertigungstechnik, der Handhabungstechnik und der Verfahrenstechnik eingesetzt werden. Mittels Planarantriebssystemen kann ein bewegliches Element einer Anlage oder Maschine in mindestens zwei linear unabhängigen Richtungen bewegt oder positioniert werden. Planarantriebssysteme können einen permanent erregten elektromagnetischen Planarmotor mit einem planaren Stator und einen auf dem Stator in mindestens zwei Richtungen beweglichen Läufer umfassen.

Bei einem permanent erregten elektromagnetischen Planarmotor wird dadurch eine Antriebskraft auf den Läufer ausgeübt, dass bestromte Spulengruppen einer Statoreinheit mit Antriebsmagneten mehrerer Magnetanordnungen des Läufers magnetisch wechselwirken. Aus dem Stand der Technik sind Planarantriebssysteme mit rechteckigen und längsgestreckten Spulengruppen und rechteckigen und längsgestreckten Magnetanordnungen des Läufers bekannt. Ein solches Planarantriebssystem wird beispielsweise in der Offenlegungsschrift DE 10 2017 131 304 A1 beschrieben. Mit einem solchen Planarantriebssystem wird insbesondere eine lineare und translative Bewegung des Läufers möglich. Das bedeutet, dass mittels eines solchen Planarantriebssystems der Läufer oberhalb einer Statorfläche, unter der die rechteckigen und längsgestreckten Spulengruppen angeordnet sind, parallel zur Statorfläche frei beweglich und senkrecht zur Statorfläche zumindest in verschiedenen Abständen zur Statorfläche bewegt werden kann.

Die Offenlegungsschrift DE 10 2019 117 431 A1 offenbart ein Planarantriebssystem, bei dem ein Spalt zwischen zwei Statormodulen einer Statorfläche angeordnet ist und bei dem gegebenenfalls Funktionselemente im Bereich des Spalts angeordnet sind, mit denen eine über eine Bewegung des Läufers hinausgehende Funktion bereitgestellt werden kann. Die Funktionselemente können gegebenenfalls auf einen Läufer des Planarantriebssystems einwirken.

Die Offenlegungsschrift DE 10 2018 129 731 A1 offenbart ein Planarantriebssystem, bei dem ein zweidimensionaler virtueller Potentialverlauf für eine Wegfindung eines Läufers verwendet werden kann.

Die Patentschrift US 6 445 093 B1 offenbart ein Planarantriebssystem, bei dem Läufer in sechs Dimensionen, darunter in drei Raumrichtungen bewegt und um drei Rotationsachsen rotiert werden können. Mit dem Planarantriebssystem können beispielsweise Halbleiter bearbeitet werden.

Es ist eine Aufgabe der Erfindung, ein Planarantriebssystem bereitzustellen, mit dem ein flächiges Objekt bearbeitet werden kann. Es ist eine weitere Aufgabe der Erfindung, ein entsprechendes Betriebsverfahren zur Bearbeitung eines flächigen Objekts mittels eines solchen Planarantriebssystems anzugeben.

Diese Aufgaben werden mit dem Verfahren zum Bearbeiten eines flächigen Objekts mittels eines Planarantriebssystems und dem Planarantriebssystem der unabhängigen Patentansprüche gelöst. Vorteilhafte Weiterbildungen sind in abhängigen Patentansprüchen angegeben.

Ein erfindungsgemäßes Planarantriebssystem umfasst zumindest eine Statoreinheit mit jeweils einer Mehrzahl von Spulen-gruppen zum Erzeugen eines Statormagnetfelds. Die Statoreinheit mit den Spulengruppen kann dabei in einem Statormodul mit einem Statormodulgehäuse angeordnet sein, wobei mehrere Statoreinheiten in einem Statormodul angeordnet sein können. Das Planarantriebssystem weist ferner eine Statorfläche oberhalb der Statoreinheit sowie einen Läufer auf, wobei der Läufer eine Mehrzahl von Magneteinheiten zum Erzeugen eines Läufermagnetfelds aufweist und oberhalb der Statorfläche mittels einer Wechselwirkung des Statormagnetfelds mit dem Läufermagnetfeld in einer ersten Richtung und/oder einer zweiten Richtung und/oder einer dritten Richtung bewegbar ist. Die erste Richtung und die zweite Richtung sind dabei parallel zur Statorfläche.

Der Läufer ist ferner in der dritten Richtung senkrecht zur Statorfläche bewegbar. Außerdem ist ein Werkzeug am Läufer angeordnet. Das Planarantriebssystem weist ferner eine Steuereinheit auf, die eingerichtet ist, ein erstes Signal auszugeben und ein zweites Signal auszugeben. Anhand des ersten Signals werden die Spulengruppen derart bestromt, dass der Läufer in der dritten Richtung eine vorgegebene Höhe über der Statorfläche aufweist, und anhand des zweiten Signals die Spulengruppen derart bestromt werden, dass sich der Läufer auf einer vorgegebenen Trajektorie bewegt, wobei dabei das Werkzeug und ein flächiges Objekt in mechanischem Kontakt stehen und dadurch das flächige Objekt bearbeitet wird.

In einem Verfahren zum Bearbeiten eines flächigen Objekts mittels eines Planarantriebssystems weist das Planarantriebssystem zumindest eine Statoreinheit mit jeweils einer Mehrzahl von Spulengruppen zum Erzeugen eines Statormagnetfelds, eine Statorfläche oberhalb der Statoreinheit, sowie einen Läufer auf. Der Läufer weist eine Mehrzahl von Magneteinheiten zum Erzeugen eines Läufermagnetfelds auf, wobei der Läufer oberhalb der Statorfläche mittels einer Wechselwirkung des Statormagnetfelds mit dem Läufermagnetfeld in einer ersten Richtung und/oder einer zweiten Richtung und/oder einer dritten Richtung bewegbar ist, wobei die erste Richtung und die zweite Richtung parallel zur Statorfläche sind. Der Läufer ist ferner in der dritten Richtung senkrecht zur Statorfläche bewegbar. Ein Werkzeug ist am Läufer angeordnet, wobei das flächige Objekt zwischen der Statorfläche und dem Läufer angeordnet ist. Eine Anordnung des flächigen Objekts zwischen der Statorfläche und dem Läufer kann dabei umfassen, dass der Läufer zumindest teilweise das flächige Objekt überdeckt. Während der Bearbeitung werden die folgenden Schritte durchgeführt:
- Die Spulengruppen werden derart bestromt, dass der Läufer in der dritten Richtung eine vorgegebene Höhe über der Statorfläche aufweist;
- Die Spulengruppen werden derart bestromt, dass sich der Läufer auf einer vorgegebenen Trajektorie bewegt, wobei dabei das Werkzeug und das flächige Objekt in mechanischem Kontakt stehen und dadurch das flächige Objekt bearbeitet wird.

Ein flächiges Objekt kann dabei insbesondere ein Objekt umfassen, das in der dritten Richtung deutlich kleinere Abmessungen hat als in der ersten Richtung und/oder der zweiten Richtung. Das flächige Objekt kann beispielsweise Papier, Karton, eine Lage Kunststoff, ein Glas oder ein Metallblech sein. In letzterem Fall kann insbesondere vorgesehen sein, dass das Metallblech nicht ferromagnetisch ist, um die Wechselwirkung des Statormagnetfelds mit dem Läufermagnetfeld nicht übermäßig zu stören. Durch die Anordnung des flächigen Objekts zwischen dem Läufer und der Statorfläche kann eine Kraft des Werkzeugs auf das flächige Objekt gut kontrolliert werden, da diese Kraft mittels der Bestromung der Spulengruppen und der sich daraus ergebenden Anziehung zwischen den Spulengruppen und den Magneteinheiten gut eingestellt und/oder gesteuert und/oder geregelt werden kann. Somit wird ein einfaches Bearbeitungsverfahren für flächige Objekte bereitgestellt. Eine Dicke des flächigen Objekts kann beispielsweise bis zu 5 Millimeter, bevorzugt maximal 2 Millimeter sein.

In einer Ausführungsform des Verfahrens wird beim Bestromen der Spulengruppen derart, dass der Läufer in der dritten Richtung eine vorgegebene Höhe über der Statorfläche aufweist eine magnetische Permeabilität des flächigen Objekts berücksichtigt. Die magnetische Permeabilität kann dabei entweder vorgegeben sein anhand einer Kenntnis über das Material, die Dicke und/oder sonstige Eigenschaften des flächigen Objekts oder mittels eines Sensors ermittelt werden.

In einer Ausführungsform des Verfahrens wird eine Stromstärke der Spulengruppen anhand der magnetischen Permeabilität des flächigen Objekts angepasst, insbesondere erhöht. Durch die Erhöhung der Stromstärke kann eine durch die magnetische Permeabilität ausgelöste Beeinflussung der Wechselwirkung des Statormagnetfelds mit dem Läufermagnetfeld zumindest teilweise, bevorzugt vollständig, ausgeglichen werden.

In einer Ausführungsform des Verfahrens werden zunächst die Spulengruppen derart bestromt, dass sich der Läufer in der dritten Richtung weg von der Statorfläche bewegt. Anschließend werden die Spulengruppen derart bestromt, dass sich der Läufer oberhalb des flächigen Objekts befindet. Daran anschließend werden die Spulengruppen derart bestromt, dass sich der Läufer in der dritten Richtung hin zur Statorfläche bewegt, bis das Werkzeug und das flächige Objekt in mechanischem Kontakt stehen. Dies kann der Bestimmung einer Dicke des flächigen Objekts in der dritten Richtung dienen, wobei die vorgegebene Höhe während der Bearbeitung anhand dieser Dicke eingestellt werden kann. Durch das zunächst vorgesehene anheben des Läufers und das daran anschließende Absenken wird eine einfache Möglichkeit gegeben, den Läufer während der Bearbeitung auf der vorgegebenen Höhe bewegen zu können.

In einer Ausführungsform des Verfahrens wird beim Bestromen der Spulengruppen derart, dass sich der Läufer auf einer vorgegebenen Trajektorie bewegt, für zumindest einen Punkt der Trajektorie eine vorgegebene Kraft mit einer ermittelten Kraft verglichen und die Bestromung der Spulengruppen derart vorgenommen, dass die ermittelte Kraft der vorgegebenen Kraft entspricht. Dadurch können durch das Werkzeug übermittelte Kräfte in der ersten Richtung und/oder der zweiten Richtung und/oder der dritten Richtung eingestellt werden.

In einer Ausführungsform des Verfahrens wird eine Dicke des flächigen Objekts in der dritten Richtung ermittelt und die vorgegebene Höhe mittels der Dicke berechnet. Hierzu können beispielsweise innerhalb des Planarantriebssystems angeordnete Magnetfeldsensoren, die einer Bestimmung einer Position des Läufers dienen können, verwendet werden.

In einer Ausführungsform des Verfahrens wird die Dicke des flächigen Objekts in der dritten Richtung mittels eines am Läufer angeordneten Sensors ermittelt.

In einer Ausführungsform des Verfahrens wird zumindest ein Fixierungsläufer mittels der Spulengruppen derart hin zur Statorfläche bewegt, dass das flächige Objekt an der Statorfläche mittels des Fixierungsläufers an einer Bewegung in der ersten Richtung und/oder zweiten Richtung und/oder dritten Richtung eingeschränkt ist. Dies ermöglicht eine verbesserte Bearbeitung des flächigen Objekts.

In einer Ausführungsform des Verfahrens wirkt ein Krafterhöhungsläufer mittels zumindest einer Kraftübertragungseinheit auf den Läufer ein, um eine Kraft des Werkzeugs auf das flächige Objekt in der dritten Richtung zu erhöhen. Dies ermöglicht ebenfalls eine verbesserte Bearbeitung des flächigen Objekts.

In einer Ausführungsform des Verfahrens weist das Werkzeug ein Schneidwerkzeug auf. Das Bearbeiten des flächigen Objekts umfasst ein Schneiden.

In einer Ausführungsform des Verfahrens weist das Schneidwerkzeug eine erste Schneide und zumindest eine zweite Schneide auf, wobei die erste Schneide an einer erste Seite des Läufers und die zweite Schneide an einer zweiten Seite des Läufers angeordnet ist, wobei die erste Seite und die zweite Seite des Läufers (100) einander gegenüberliegen. Zum Bearbeiten des flächigen Objekts kann der Läufer schräg gestellt werden derart, dass entweder die erste Schneide oder die zweite Schneide mit dem flächigen Objekt in mechanischem Kontakt stehen. Dadurch können verschiedene Schneiden an einem Läufer zum Einsatz kommen und so das Verfahren insgesamt effizienter gestaltet werden, da für zwei unabhängige Schneidvorgänge nur ein Läufer benötigt wird.

In einer Ausführungsform des Verfahrens weist das Werkzeug ein Stanzwerkzeug auf. Das Bearbeiten des flächigen Objekts umfasst ein Stanzen.

In einer Ausführungsform des Verfahrens weist das Werkzeug einen Stempel aufweist. Ein Stempelbett ist auf der Statorfläche angeordnet. Das Bearbeiten des flächigen Objekts umfasst ein Stempeln. Das Stempelbett kann auch als Stempelkissen bezeichnet werden.

In einer Ausführungsform des Verfahrens weist das Werkzeug einen Druckkopf auf. Das Bearbeiten des flächigen Objekts umfasst ein Drucken. Das Übertragen eines Druckmaterials wie beispielsweise Tinte, Farbe, Toner oder Ähnliches erfolgt dabei mittels mechanischen Kontaktes zwischen Werkzeug und flächigem Objekt, wobei das Druckmaterial den mechanischen Kontakt herstellt.

In einer Ausführungsform des Verfahrens weist das Werkzeug eine Klebstoffdüse auf. Das Bearbeiten des flächigen Objekts umfasst ein Aufbringen eines Klebstoffes. Das Übertragen des Klebstoffes erfolgt dabei mittels mechanischen Kontaktes zwischen Werkzeug und flächigem Objekt, wobei der Klebstoff den mechanischen Kontakt herstellt.

In einer Ausführungsform des Verfahrens umfasst das Werkzeug eine Walze. Das Bearbeiten des flächigen Objekts umfasst ein Walzen.

In einer Ausführungsform des Verfahrens umfasst das Werkzeug eine Presse. Das Bearbeiten des flächigen Objekts umfasst ein Pressen.

In einer Ausführungsform des Verfahrens umfasst das Werkzeug einen Stift. Das Bearbeiten des flächigen Objekts umfasst ein Schreiben oder Zeichnen.

In einer Ausführungsform des Verfahrens umfasst das Werkzeug ein angetriebenes Werkzeug. Das Bearbeiten des flächigen Objekts umfasst ein Bohren und/oder Fräsen und/oder Gravieren und/oder Sägen und/oder Schleifen und/oder Perforieren. Das angetriebene Werkzeug kann ein Elektrowerkzeug sein und einen elektrischen Antrieb aufweisen. Alternativ oder zusätzlich kann das angetriebene Werkzeug einen pneumatischen und/oder hydraulischen Antrieb aufweisen.

In einer Ausführungsform des Verfahrens umfasst das Bearbeiten des flächigen Objekts ein Falten. In einer Ausführungsform des Verfahrens umfasst das Bearbeiten des flächigen Objekts ein Bügeln. In einer Ausführungsform des Verfahrens umfasst das Bearbeiten des flächigen Objekts ein Ritzen von Glas. In einer Ausführungsform des Verfahrens umfasst das Bearbeiten des flächigen Objekts ein Schneiden von Stoff.

Die Erfindung wird anhand der beigefügten Figuren näher erläutert. Hierbei zeigen:
- Fig. 1: ein Planarantriebssystem;
- Fig. 2: eine Seitenansicht eines Planarantriebssystems;
- Fig. 3: eine Seitenansicht eines Planarantriebssystems;
- Fig. 4: eine Draufsicht auf ein Planarantriebssystem;
- Fig. 5: eine Draufsicht auf ein Planarantriebssystem;
- Fig. 6: eine Draufsicht auf ein Planarantriebssystem;
- Fig. 7: eine Seitenansicht eines Planarantriebssystems;
- Fig. 8: eine Ansicht eines Läufers;
- Fig. 9: eine Draufsicht auf ein Planarantriebssystem;
- Fig. 10: eine Seitenansicht eines Planarantriebssystems;
- Fig. 11: eine Seitenansicht eines Planarantriebssystems;
- Fig. 12: eine Draufsicht auf ein Planarantriebssystem;
- Fig. 13: eine Seitenansicht eines Planarantriebssystems;
- Fig. 14: eine Seitenansicht eines Planarantriebssystems;
- Fig. 15: eine Seitenansicht eines Planarantriebssystems;
- Fig. 16: eine Seitenansicht eines Planarantriebssystems;
- Fig. 17: eine Seitenansicht eines Planarantriebssystems;
- Fig. 18: eine Seitenansicht eines Planarantriebssystems; und
- Fig. 19: eine Seitenansicht eines Planarantriebssystems.

Im Folgenden können für gleiche Merkmale gleiche Bezugszeichen verwendet werden. Weiter kann es aus Gründen der Übersichtlichkeit vorgesehen sein, dass nicht in jeder Figur sämtliche Elemente gezeigt sind. Weiter kann es der Übersicht halber vorgesehen sein, dass nicht in jeder Zeichnung jedes Element mit einem eigenen Bezugszeichen versehen ist.

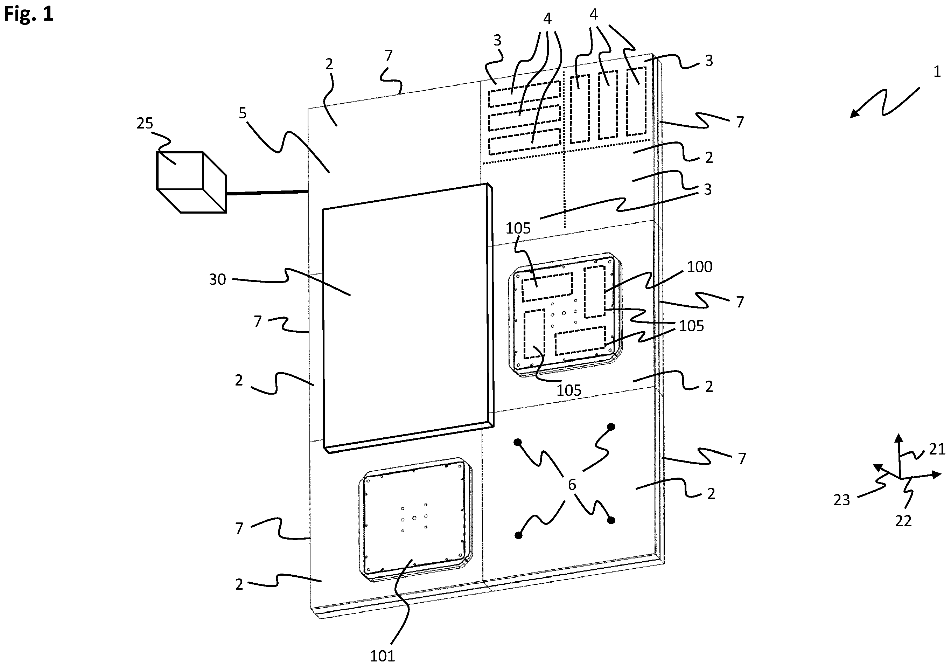

Figur 1 zeigt ein Planarantriebssystem 1 mit sechs Statormodulen 2, wobei die Statormodule 2 derart angeordnet sind, dass ein Rechteck von zwei auf drei Statormodulen 2 gebildet ist. Auch andere Anordnungen der Statormodule 2 sind denkbar, es können auch mehr oder weniger als sechs Statormodule 2 angeordnet werden. Im oben rechts dargestellten Statormodul 2 ist ein Innenleben des Statormoduls 2 skizziert, wobei das Statormodul 2 vier Statoreinheiten 3 umfasst, wobei die vier Statoreinheiten 3 innerhalb eines Statormoduls 2 in einer quadratischen zwei-auf-zwei-Anordnung angeordnet sind. Ferner ist für zwei Statoreinheiten 3 dargestellt, dass die Statoreinheiten 3 Spulenanordnungen 4 umfassen, wobei die Spulenanordnungen 4 mit unterschiedlicher Ausrichtung dargestellt sind. Die Spulenanordnungen 4 dienen zum Erzeugen eines Statormagnetfelds. Die Spulenanordnungen 4 sind in der dargestellten Ausführungsform als rechteckige und längsgestreckte Spulenanordnungen 4 ausgestaltet. In jeder Statoreinheit 3 der Statormodule 2 sind jeweils drei einzelne, rechteckige und längsgestreckte Spulen einer Spulenanordnung 4 dargestellt. Ebenso könnte bei einer nicht dargestellten Ausführungsform eine andere Anzahl an einzelnen rechteckigen und längsgestreckten Spulen eine Spulenanordnung 4 bilden. Dabei orientiert sich ihre Längserstreckung parallel zu einer der Kanten der jeweiligen Statoreinheit 3. Unterhalb jeder der dargestellten Spulenanordnung 4 sind weitere Spulen vorhanden, die in Bezug auf ihre Längserstreckung eine um 90° gedrehte Orientierung aufweisen. Dieses Raster aus längserstreckten und rechteckigen Spulen einer Spulenanordnung 4 kann mehrfach übereinander ausgebildet sein. Real sind weder Statoreinheiten 3 noch Spulenanordnungen 4 sichtbar, da sie durch ein Gehäuse 7 des Statormoduls 2 umgeben sind. Die sechs Statormodule 2 bilden eine zusammenhängende Statorfläche 5 oberhalb der Statoreinheiten 3. Ferner ist ein Läufer 100 angeordnet, wobei der Läufer eine Mehrzahl von Magneteinheiten 105 zum Erzeugen eines Läufermagnetfelds aufweist. Die Spulenanordnungen 4 können bei entsprechender Bestromung mit den Magneteinheiten 105 wechselwirken und dadurch den Läufer 100 innerhalb des Planarantriebssystems 1 oberhalb der Statorfläche 5 bewegen. Durch die Statorfläche 5 ist also eine Bewegungsebene für den Läufer 100 definiert. Die Darstellung in Figur 1 ist vereinfacht, da in jeder Statoreinheit 3 mehrere Spulenanordnungen 4 angeordnet sind, die jeweils im 90° Winkel zueinanderstehen, jedoch nur jeweils eine Lage von Spulenanordnungen 4 dargestellt ist. Die Magneteinheiten 105 sind innerhalb des Läufers 100 umlaufend angeordnet und können jeweils mit den Spulenanordnungen 4 wechselwirken, um den Läufer 100 zu bewegen. In Figur 1 ist weiterhin ein weiterer Läufer 101 dargestellt, bei dem die integrierten Magneteinheiten 105 nicht dargestellt sind. Die Bewegungen des Läufers 100 können dabei insbesondere in einer durch eine erste Richtung 21 und eine zweite Richtung 22 aufgespannte Ebene erfolgen. Ferner ist eine Überlagerung dieser Bewegungen möglich, so dass der Läufer 100 in alle Richtungen parallel zur Statorfläche 5 bewegt werden kann. Ferner kann der Läufer 100 in eine dritte Richtung 23 senkrecht zur Statorfläche 5 bewegt werden. Die Anordnung von vier Statoreinheiten 3 innerhalb eines Statormoduls 2 entspricht den von der Anmelderin unter dem Namen XPlanar vertriebenen Statormodulen 2 für ein Planarantriebssystem 1. Es kann alternativ vorgesehen, auch mehr oder weniger Statoreinheiten 3 innerhalb eines Statormoduls 2 anzuordnen. Beispielsweise kann jedes Statormodul 2 nur eine Statoreinheit 3 umfassen oder mehr als vier Statoreinheiten 3 umfassen.

Ebenfalls in Figur 1 dargestellt ist ein flächiges Objekt 30, das auf der Statorfläche 5 angeordnet ist. Der Läufer 100 ist in Figur 1 neben dem flächigen Objekt 30 angeordnet. Ein Werkzeug, welches am Läufer 100 angeordnet ist, kann zum Bearbeiten des flächigen Objekts dienen, ist jedoch perspektivisch in Figur 1 nicht sichtbar. Dadurch, dass die Läufer 100 mit dem Werkzeug frei über die Statorfläche 5 bewegbar sind, ist eine flexible Bearbeitung des flächigen Objekts 30 möglich, bei der beispielsweise mehrere Läufer 100 mit unterschiedlichen Werkzeugen eingesetzt werden können. Die Läufer 100 sind dabei individuell steuerbar und können sich so unabhängig voneinander bewegen, so dass flexible Bearbeitungsabläufe möglich werden.

Ferner kann eine zusätzliche, in Figur 1 nicht dargestellte, Abdeckung aus einem nicht magnetischen Material zur Abdeckung der Statormodule 2 eingesetzt werden. Die Abdeckung kann beispielsweise dazu dienen, die Statormodule 2 beziehungsweise die Statorfläche 5 bei Bearbeitungsprozessen vor Beschädigungen zu schützen. Die Abdeckung kann beispielsweise bis zu einem Millimeter dick sein.

Zusätzlich in Figur 1 dargestellt ist eine Steuereinheit 25, die mit einem der Statormodule 2 verbunden ist. Dabei kann vorgesehen sein, dass die Statormodule 2 Kommunikationssignale untereinander weitergeben können. Alternativ kann auch jedes Statormodul 2 mit der Steuereinheit 25 verbunden sein (nicht in Figur 1 gezeigt). Die Steuereinheit 25 ist eingerichtet, Signale an die Statormodule 2 auszugeben, wobei die Statormodule 2 eingerichtet sind, die Spulenanordnungen 4 anhand der Signale zu bestromen und dadurch eine Bewegung des Läufers 100 parallel zur Statorfläche 5 zu steuern. Die Spulenanordnungen 3 können anhand der Signale ferner derart bestromt werden, dass der Läufer 100 senkrecht zur Statorfläche 5 bewegt wird. Außerdem können die Spulenanordnungen 3 anhand der Signale derart bestromt werden, dass der Läufer 100 um eine Achse senkrecht zur Statorfläche 5 rotiert oder zumindest um einige Grad gedreht oder um eine Achse parallel zur Statorfläche 5 um einige Grad gedreht wird.

Um das flächige Objekt 30 zu bearbeiten, sind folgende Schritte vorgesehen:
- Bestromen der Spulengruppen 4 derart, dass der Läufer 100 in der dritten Richtung 23 eine vorgegebene Höhe über der Statorfläche 5 aufweist;
- Bestromen der Spulengruppen 4 derart, dass sich der Läufer 100 auf einer vorgegebenen Trajektorie bewegt, wobei dabei das Werkzeug und das flächige Objekt 30 in mechanischem Kontakt stehen und dadurch das flächige Objekt bearbeitet wird.

Die Steuereinheit 25 ist dabei eingerichtet, ein erstes Signal auszugeben, wobei anhand des ersten Signals die Spulengruppen 4 derart bestromt werden, dass der Läufer 100 in der dritten Richtung 23 eine vorgegebene Höhe über der Statorfläche 5 aufweist, und ferner ein zweites Signal auszugeben, wobei anhand des zweiten Signals die Spulengruppen 4 derart bestromt werden, dass sich der Läufer 100 auf einer vorgegebenen Trajektorie bewegt, wobei dabei das Werkzeug und ein flächiges Objekt 30 in mechanischem Kontakt stehen und dadurch das flächige Objekt 30 bearbeitet wird. Dabei kann das flächige Objekt 30 zwischen dem Läufer 100 und der Statorfläche 5 angeordnet sein. Dies kann beispielsweise umfassen, dass der Läufer 100 das flächige Objekt 30 zumindest teilweise überdeckt.

Das flächige Objekt 30 kann dabei insbesondere ein Objekt umfassen, das in der dritten Richtung 23 deutlich kleinere Abmessungen hat als in der ersten Richtung 21 und/oder der zweiten Richtung 22. Das flächige Objekt 30 kann beispielsweise Papier, Karton, eine Lage Kunststoff oder ein Metallblech sein. In letzterem Fall kann insbesondere vorgesehen sein, dass das Metallblech nicht ferromagnetisch ist, um die Wechselwirkung des Statormagnetfelds mit dem Läufermagnetfeld nicht übermäßig zu stören. Durch die Anordnung des flächigen Objekts 30 zwischen dem Läufer 100 und der Statorfläche 5 kann eine Kraft des Werkzeugs auf das flächige Objekt gut kontrolliert werden, da diese Kraft mittels der Bestromung der Spulengruppen 4 und der sich daraus ergebenden Anziehung zwischen den Spulengruppen 4 und den Magneteinheiten 105 gut eingestellt und/oder gesteuert und/oder geregelt werden kann. Somit wird ein einfaches Bearbeitungsverfahren für flächige Objekte 30 bereitgestellt.

Ebenfalls in Figur 1 dargestellt sind Magnetfeldsensoren 6 in einem der Statormodule 2, wobei jedes der Statormodule 2 Magnetfeldsensoren 6 umfassen kann. In einem Ausführungsbeispiel des Verfahrens wird eine Dicke des flächigen Objekts 30 ermittelt. Die Dicke kann dabei eine Abmessung des flächigen Objekts 30 in der dritten Richtung 23 umfassen. Die vorgegebene Höhe wird mittels der Dicke berechnet. Hierzu können beispielsweise die innerhalb des Planarantriebssystems 1 angeordneten Magnetfeldsensoren 6, die zusätzlich auch einer Bestimmung einer Position des Läufers 100 dienen können, verwendet werden.

In einem Ausführungsbeispiel des Verfahrens wird beim Bestromen der Spulengruppen 4 derart, dass der Läufer 100 in der dritten Richtung 23 eine vorgegebene Höhe über der Statorfläche 5 aufweist eine magnetische Permeabilität des flächigen Objekts 30 berücksichtigt. Die magnetische Permeabilität kann dabei entweder vorgegeben sein anhand einer Kenntnis über das Material, die Dicke und/oder sonstige Eigenschaften des flächigen Objekts 30 oder mittels eines Sensors, beispielsweise mittels der Magnetfeldsensoren 6, ermittelt werden.

In einem Ausführungsbeispiel des Verfahrens wird eine Stromstärke der Spulengruppen 4 anhand der magnetischen Permeabilität des flächigen Objekts 30 angepasst, insbesondere erhöht. Durch die Erhöhung der Stromstärke kann eine durch die magnetische Permeabilität ausgelöste Beeinflussung der Wechselwirkung des Statormagnetfelds mit dem Läufermagnetfeld zumindest teilweise, bevorzugt vollständig, ausgeglichen werden.

In einem Ausführungsbeispiel ist mehr als ein Läufer 100 vorgesehen, wobei jeder dieser Läufer 100 ein Werkzeug umfasst. Dies ermöglicht einen einfachen Austausch der Werkzeuge.

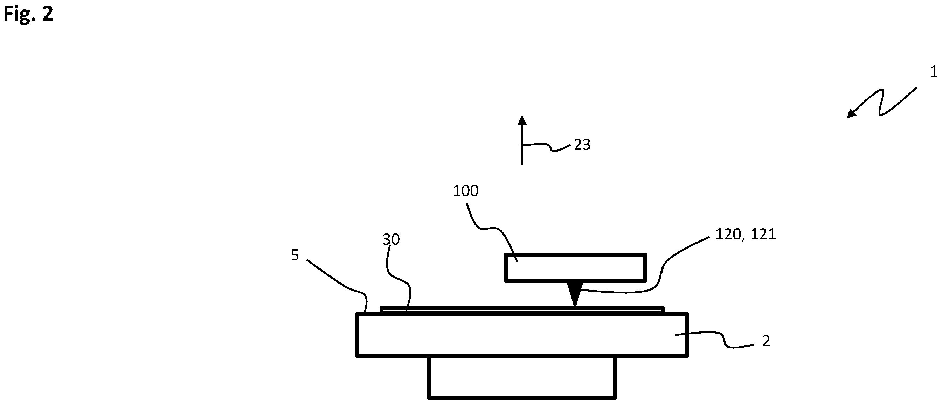

Figur 2 zeigt eine Seitenansicht eines Planarantriebssystems 1, mit dem ein flächiges Objekt 30 bearbeitet werden kann. Im Gegensatz zur Figur 1 ist nur ein Statormodul 2 dargestellt, weitere Statormodule 2 analog zu Figur 1 können jedoch ebenfalls vorgesehen sein. Ferner kann das Statormodul 2, wie im Zusammenhang mit Figur 1 erläutert, Statoreinheiten 3, Spulengruppen 4 und Magnetfeldsensoren 6 aufweisen. Das flächige Objekt 30 ist zwischen der Statorfläche 5 und dem Läufer 100 angeordnet. Der Läufer 100 weist ein Werkzeug 120 auf, das als Schneidwerkzeug 121 ausgestaltet ist und mittig am Läufer 100 angeordnet ist. Das Schneidwerkzeug 121 dient dabei dazu, das flächige Objekt 30 zu schneiden. Dazu steht das Schneidwerkzeug 121 im mechanischen Kontakt mit dem flächigen Objekt 30. Das Schneidwerkzeug 121 kann auch an anderen Positionen des Läufers 100 angeordnet sein.

Dabei kann ein Arbeitsraum des Schneidwerkzeugs 121 die gesamte Statorfläche 5 umfassen und ist damit nur durch die Größe und Anordnung der Statormodule eingeschränkt. Ferner kann eine Leistungsaufnahme der Spulengruppen 4 gemessen werden und anhand einer Veränderung der Leistungsaufnahme erkannt werden, dass das Schneidwerkzeug 121 stumpf ist oder wird. In diesem Fall kann der Läufer 100 mit dem Schneidwerkzeug 121 in der dritten Richtung 23 vom flächigen Objekt 30 wegbewegt und durch einen anderen Läufer mit scharfem Schneidwerkzeug ersetzt werden. Ferner kann vorgesehen sein, dass mehrere Läufer 100 mit mehreren Schneidwerkzeugen 121 eingesetzt werden, die das flächige Objekt 30 jeweils an unterschiedlichen Stellen bearbeiten. Da die Läufer 100 individuell steuerbar sind, ergibt sich so eine flexible Bearbeitungsmöglichkeit.

In einem Ausführungsbeispiel werden zunächst die Spulengruppen 4 derart bestromt, dass sich der Läufer 100 in der dritten Richtung 23 weg von der Statorfläche 5 bewegt. Anschließend werden die Spulengruppen 4 derart bestromt, dass sich der Läufer 100 oberhalb des flächigen Objekts 30 befindet. Daran anschließend werden die Spulengruppen 4 derart bestromt, dass sich der Läufer 100 in der dritten Richtung 23 hin zur Statorfläche 5 bewegt, bis das Werkzeug 120, also das Schneidwerkzeug 121, und das flächige Objekt 30 in mechanischem Kontakt stehen. Dieses Verfahren wurde zwar im Zusammenhang mit Figur 2 genauer erläutert, kann aber auch für die anderen Ausführungsbeispiele mit alternativen Werkzeugen angewendet werden. Insbesondere können die Magnetfeldsensoren 6 ausgewertet werden, um den mechanischen Kontakt des Werkzeugs 120 mit dem flächigen Objekt 30 zu bestimmen, beispielsweise wenn der Läufer 100 nicht mehr weiter auf die Statorfläche 5 zubewegt werden kann, da das Werkzeug 120 mit dem flächigen Objekt 30 bereits in Kontakt steht. Gegebenenfalls kann außerdem eine Bearbeitungstiefe bei der Einstellung der vorbestimmten Höhe verwendet werden, im Ausführungsbeispiel der Figur 2 beispielsweise eine benötigte Schnitttiefe. Es kann ferner vorgesehen sein, dass der Läufer 100 mit dem Schneidwerkzeug 121 um 360 Grad rotiert werden kann. Dies kann zum Bohren von Löchern genutzt werden. Insbesondere kann vorgesehen sein, sowohl für gerade Schnitte als auch für das Bohren von Löchern einen Läufer 100 mit einem Schneidwerkzeug 121 zu verwenden. Dies ermöglicht eine flexiblere Bearbeitung.

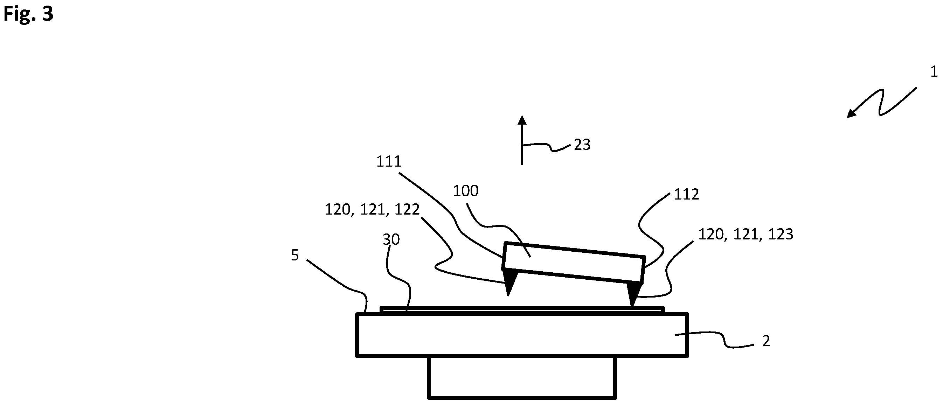

Figur 3 zeigt eine Seitenansicht eines Planarantriebssystems 1, das dem Planarantriebssystem 1 der Figur 2 entspricht, sofern im Folgenden keine Unterschiede beschrieben sind. Das Schneidwerkzeug 121 weist eine erste Schneide 122 und eine zweite Schneide 123 auf, wobei die erste Schneide 122 an einer erste Seite 111 des Läufers 100 und die zweite Schneide 123 an einer zweiten Seite 112 des Läufers 100 angeordnet ist. Die erste

Seite 111 und die zweite Seite 112 des Läufers 100 liegen einander gegenüber. Zum Bearbeiten des flächigen Objekts 30 wird der Läufer 100 schräg gestellt derart, dass entweder die erste Schneide 122 oder die zweite Schneide 123 mit dem flächigen Objekt 30 in mechanischem Kontakt steht. In Figur 3 ist dabei der Fall dargestellt, dass die zweite Schneide 123 mit dem flächigen Objekt 30 in mechanischem Kontakt steht und die erste Schneide 122 nicht in mechanischem Kontakt steht. Der Läufer 100 ist schräg gestellt, also nicht parallel zur Statorfläche 5. Somit kann zwischen der ersten Schneide 122 und der zweiten Schneide 123 ausgewählt werden und so ein flexibleres Bearbeiten erfolgen, insbesondere dann, wenn die erste Schneide 122 und die zweite Schneide 123 unterschiedlich sind. Dabei kann ferner vorgesehen sein, dass die erste Schneide 122 und die zweite Schneide 123 zum Bearbeiten unterschiedlicher Materialien geeignet sind, also insbesondere die erste Schneide 122 für ein erstes Material geeignet und die zweite Schneide 123 für ein zweites Material geeignet. In einer alternativen, nicht dargestellten Ausführungsform können auch die erste Schneide 122 und die zweite Schneide 123 gleichzeitig in mechanischem Kontakt mit dem flächigen Objekt 30 stehen und das flächige Objekt 30 gemeinsam bearbeiten. Ebenso können mehr als zwei Schneidwerkzeuge 121 an einem Läufer 100 angeordnet sein. Durch eine Bewegung des Läufers 100 mit dem Schneidwerkzeug 121 auf einer Kreisbahn können ferner Kreise geschnitten werden.

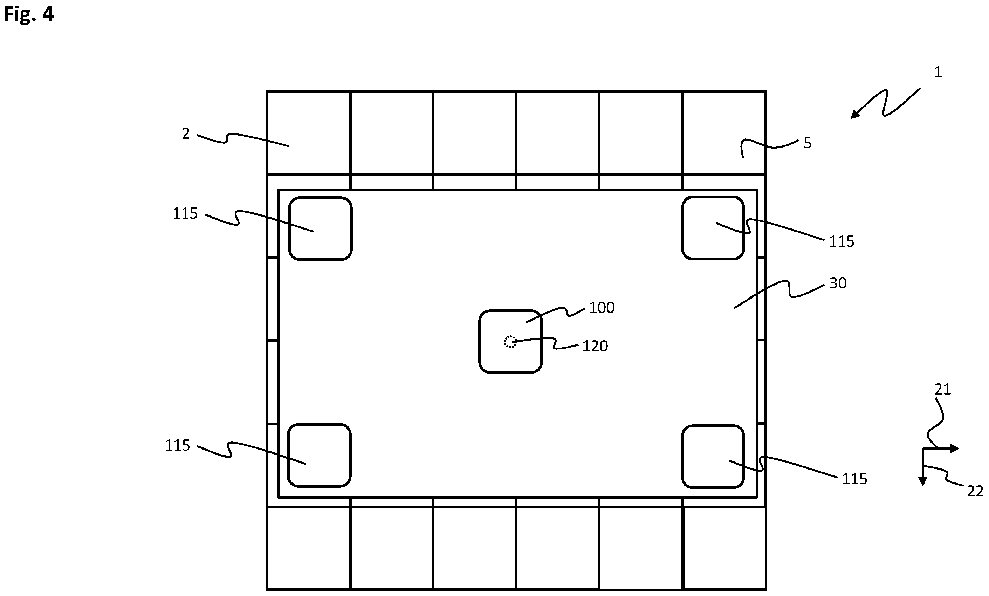

Figur 4 zeigt eine Draufsicht auf ein Planarantriebssystem 1, welches die im Zusammenhang mit den Figuren 1 bis 3 beschriebenen Merkmale aufweisen kann. Das Planarantriebssystem 1 weist ferner vier Fixierungsläufer 115 auf, wobei die Anzahl der Fixierungsläufer 115 mindestens eins beträgt. Mittels der Spulengruppen 4 werden die Fixierungsläufer 115 derart hin zur Statorfläche 5 bewegt, dass das flächige Objekt 30 an der Statorfläche 5 mittels des Fixierungsläufers 115 an einer Bewegung in der ersten Richtung 21 und/oder zweiten Richtung 22 und/oder dritten Richtung 23 eingeschränkt ist. Somit kann der Läufer 100 mit dem Werkzeug 120 einfacher zur Bearbeitung des flächigen Objekts 30 verwendet werden, da das flächige Objekt 30 besser an der Statorfläche 5 anliegt und sich weniger wahrscheinlich aufgrund einer Krafteinwirkung durch das Werkzeug 120 bewegt.

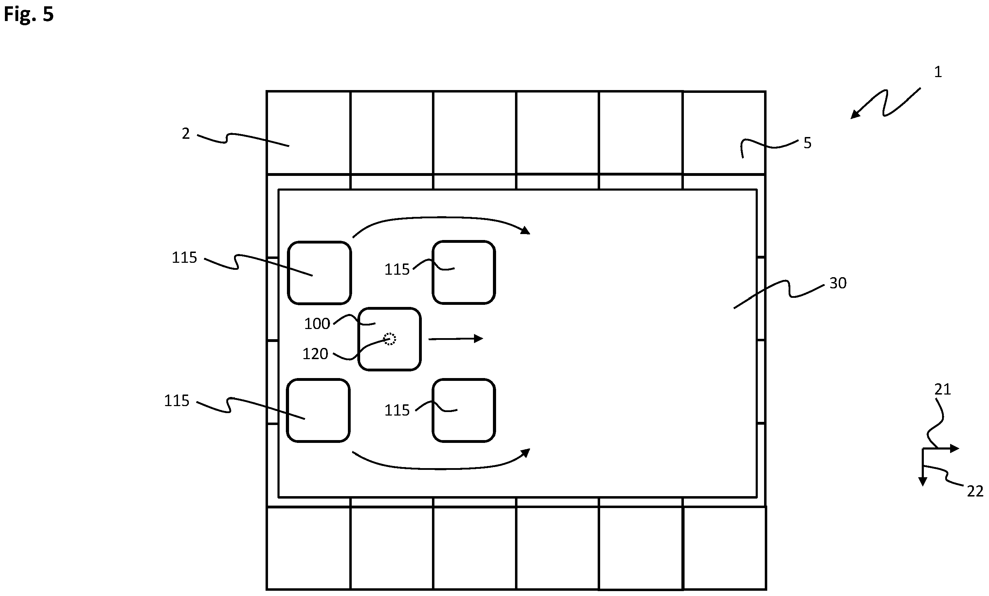

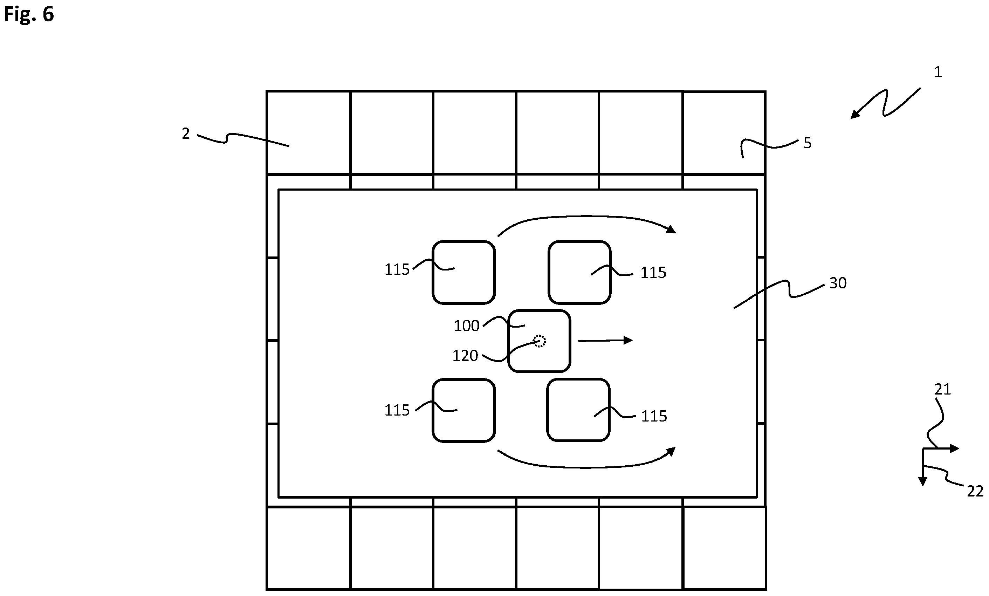

Figur 5 und Figur 6 zeigen eine Draufsicht auf ein Planarantriebssystem 1, welches wie das Planarantriebssystem der Figur 4 aufgebaut ist. Während des Betriebs, also während der Bearbeitung des flächigen Objekts 30 mittels des Läufers 100 mit dem Werkzeug 120 können einzelne der Fixierungsläufer 115 bewegt werden, so dass eine Fixierung des flächigen Objekts 30 immer in der Nähe des Läufers 100 mit dem Werkzeug 120 erfolgt und sich so das flächige Objekt 30 noch weniger wahrscheinlich aufgrund einer Krafteinwirkung durch das Werkzeug 120 bewegt. Der Fixierungsläufer 115 kann dabei optional ein Werkzeug wie beispielsweise eine oder mehrere Rollen aufweisen. Wie mittels der Pfeile angedeutet, können nicht mehr zur Fixierung des flächigen Objekts 30 benötige Fixierungsläufer 115 an anderen, aktuell zur Fixierung des flächigen Objekts 30 benötigen Fixierungsläufern 115 vorbeigesteuert werden, um so das flächige Objekt 30 erneut zu fixieren, bevor der Läufer 100 mit dem Werkzeug 120 einen nächsten Bearbeitungsbereich erreicht. Somit ist eine kontinuierliche Bearbeitung des flächigen Objektes 30 möglich, bei der nur eine geringe Anzahl an Fixierungsläufern 115 notwendig ist. Ferner kann das flächige Objekt 30 die gesamte Statorfläche 5 einnehmen, so dass eine Größe des flächigen Objekts 30 nur von der mittels der Anzahl der Statormodule 2 beliebig vergrößerbaren Statorfläche 5 begrenzt wird.

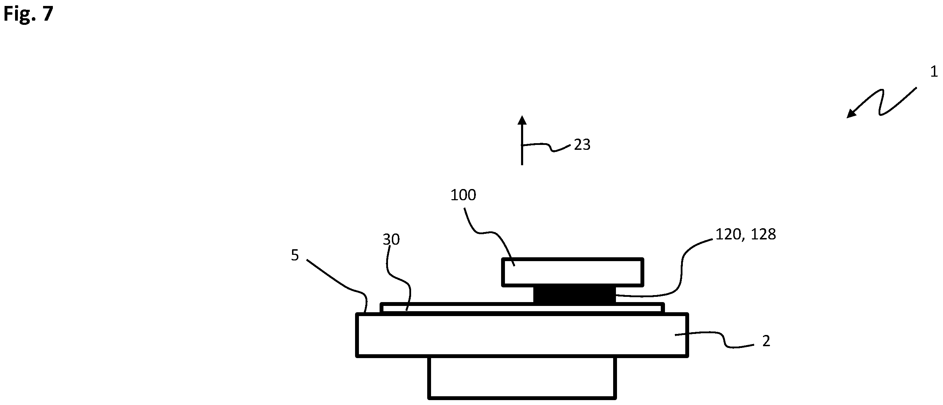

Figur 7 zeigt eine Seitenansicht eines Planarantriebssystems 1, das dem Planarantriebssystem 1 der Figur 2 entspricht, sofern im Folgenden keine Unterschiede beschrieben sind. Anstelle des Schneidwerkzeugs 121 umfasst das Werkzeug 120 ein Stanzwerkzeug 128, welches am Läufer 100 angeordnet ist. Das Bearbeiten des flächigen Objekts 30 umfasst ein Stanzen. Das flächige Objekt 30 kann dabei ein Lebensmittel wie eine Scheibe Käse oder Wurst umfassen. Es können aber auch andere Materialien, insbesondere die bereits genannten Materialien gestanzt werden. Es kann vorgesehen sein, dass das Stanzwerkzeug 128 eine Vorrichtung zum Auswerfen eines ausgestanzten Materials umfasst. Alternativ kann vorgesehen sein, dass die Entfernung des ausgestanzten Materials aus dem Stanzwerkzeug 128 derart erfolgt, dass die Spulengruppen 4 derart bestromt werden, dass sich der Läufer 100 hin und her bewegt, wobei durch die Bewegung ein herausschütteln des ausgestanzten Materials erfolgt. Dabei kann beispielsweise eine Hin- und Her-Bewegung mit einer Frequenz zwischen einem Zehntel Hertz und zehn Hertz erfolgen. Das Auswerfen kann dabei beispielsweise auf einer vorgegebenen Position der Statorfläche 5 erfolgen, wobei dort weitere gegebenenfalls das ausgestanzte Material von der Statorfläche 5 entfernt werden kann. Ebenso ist möglich, mittels der Magnetfeldsensoren 6 eine Stanzqualität zu überprüfen. Dies erfolgt insbesondere dadurch, dass überprüft wird, ob der Läufer 100, nachdem er auf das flächige Objekt 30 zubewegt wurde und das Stanzwerkzeug 128 auf das flächige Objekt 30 eingewirkt hat, parallel zur Statorfläche 5 steht. Ist dies der Fall, kann von einem vollständigen Stanzen ausgegangen werden. Ist dies nicht der Fall, wurde das flächige Objekt 30 nicht vollständig vom Stanzwerkzeug 30 durchstoßen.

Verschiedene Läufer 100 können dabei unterschiedliche Stanzwerkzeuge 128, also Stanzwerkzeuge 128 mit unterschiedlicher Form, aufweisen. Die Positionen, an denen die Stanzvorgänge stattfinden, können dynamisch gewählt werden, beispielsweise um möglichst viele Stanzlinge (ausgestanztes Material) aus einem Materialbogen des flächigen Objekts 30 zu erhalten. Dabei kann vorgesehen sein, dass eine ideale Stanzanordnung der Stanzwerkzeuge 128 vorher von der Steuereinheit 10 berechnet wird.

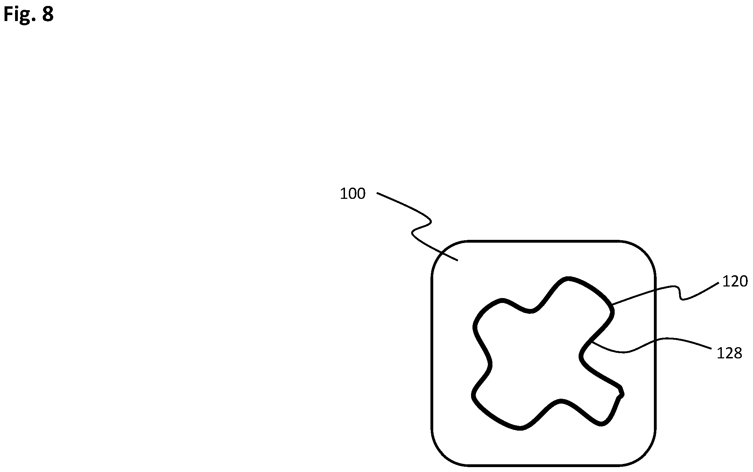

Figur 8 zeigt eine Draufsicht von unten auf den Läufer 100 mit dem Stanzwerkzeug 128 der Figur 7. Das Stanzwerkzeug 128 kann beliebige Formen umfassen. Ferner können mehrere Läufer 100 gekoppelt werden und das Stanzwerkzeug 128 über mehrere Läufer 100 angeordnet sein.

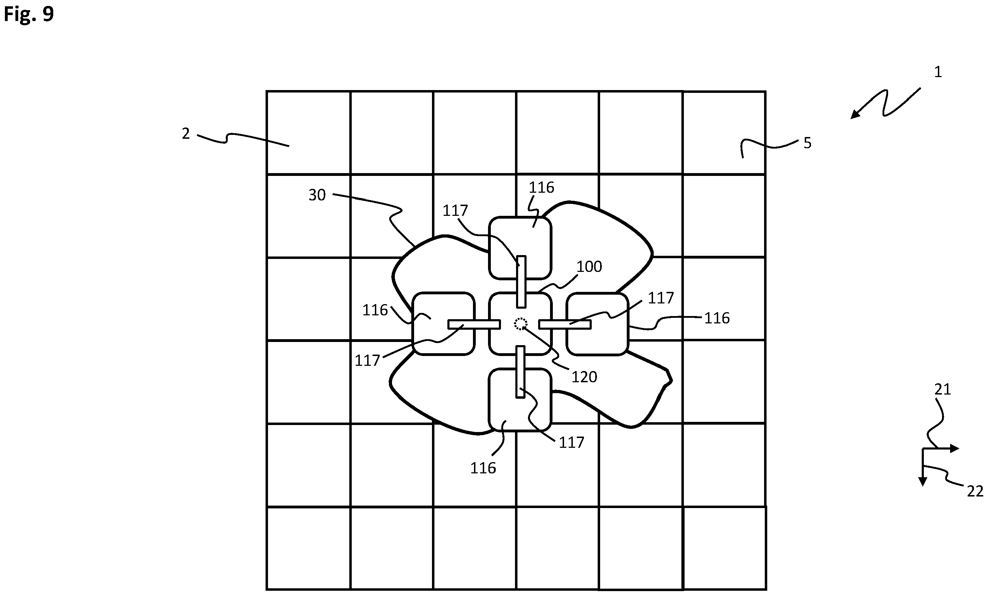

Figur 9 zeigt eine Draufsicht auf ein Planarantriebssystem 1, mit dem ein flächiges Objekt 30 bearbeitet werden kann, und bei dem vier Krafterhöhungsläufer 116 mittels Kraftübertragungseinheiten 117 auf den Läufer 100 einwirken, um eine Kraft des Werkzeugs 120 auf das flächige Objekt 30 in der dritten Richtung 23 zu erhöhen. Insbesondere kann auch eine andere Anzahl an Krafterhöhungsläufer 116 gewählt werden, beispielsweise ein Krafterhöhungsläufer 116. Die Krafterhöhungsläufer 116 sind dabei flexibel einsetzbar und können auf verschiedene Läufer 100 mit Werkzeug 120 einwirken. Dies kann insbesondere vorteilhaft sein, wenn verschiedene Läufer 100 mit verschiedenen Werkzeugen 120 eingesetzt werden sollen. Insbesondere kann das Werkzeug 120 das bereits beschriebene Schneidwerkzeug 121 oder das bereits beschriebene Stanzwerkzeug 128 umfassen. Eine maximale Kraft, mit der das Werkzeug 120 auf das flächige Objekt 30 wirken kann, ist durch die magnetische Anziehung zwischen den Spulenanordnungen 4 der Statormodule 2 und den Magneteinheiten 105 der Läufer 100 begrenzt. Durch die Krafterhöhungsläufer 116 kann eine zusätzliche Kraft auf den Läufer 100 mit dem Werkzeug 120 wirken, die durch eine magnetische Anziehung zwischen den Spulenanordnungen 4 der Statormodule 2 und den Magneteinheiten 105 der Krafterhöhungsläufer 116 erzeugt wird.

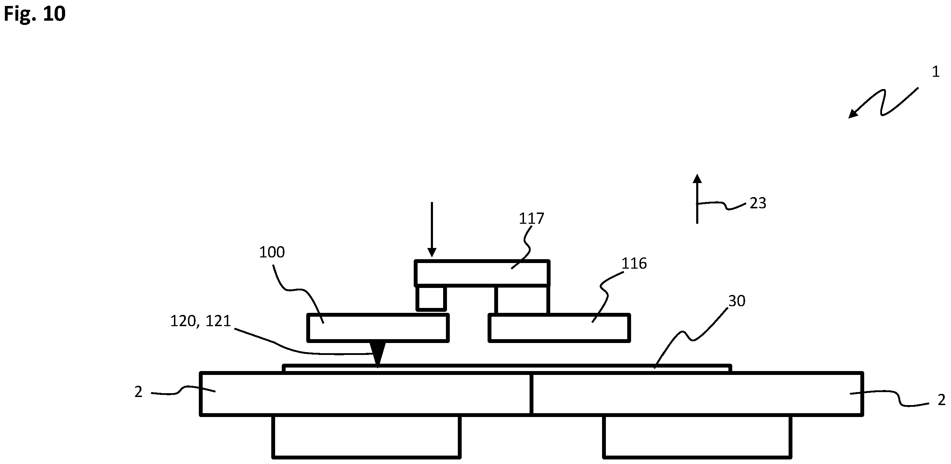

Figur 10 zeigt eine Seitenansicht eines Planarantriebssystems 1 mit einem Läufer 100 mit einem Werkzeug 120, hier einem Schneidwerkzeug 121 und einem Krafterhöhungsläufer 116 mit Kraftübertragungseinheit 117. Die Kraft des Werkzeugs 120 auf das flächige Objekt 30 kann so in der dritten Richtung 23 erhöht werden. Es kann ferner vorgesehen sein, dass bei der Verwendung von Krafterhöhungsläufern 116, wie im Zusammenhang mit Figuren 9 und 10 beschrieben, eine Anzahl der Krafterhöhungsläufer 116 anhand einer Dicke des zu bearbeitenden flächigen Objekts 30 ausgewählt wird und insbesondere mehr Krafterhöhungsläufer 116 für dickere flächige Objekte 30 verwendet werden.

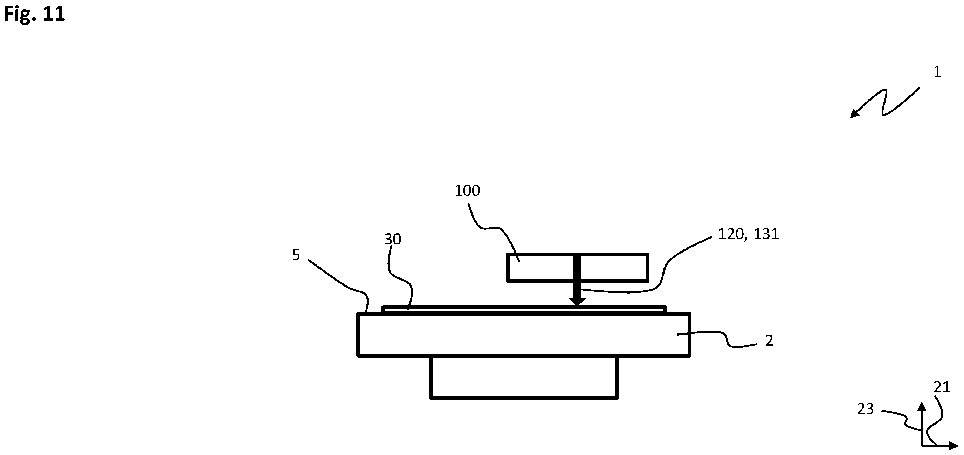

Figur 11 zeigt eine Seitenansicht eines Planarantriebssystems 1, mit dem ein flächiges Objekt 30 bearbeitet werden kann. Der Läufer 100 weist als Werkzeug 120 einen Stift 131 auf. Das Bearbeiten des flächigen Objekts 30 umfasst ein Schreiben oder Zeichnen. Insbesondere kann, wenn der Stift 131 ein Bleistift ist, eine Abnutzung einer Bleistiftmine erkannt werden, beispielsweise über die auf den Läufer 100 wirkende Kraft, ermittelt durch die Magnetfeldsensoren 6. Dann kann eine Flughöhe des Läufers 100 in der dritten Richtung 23 angepasst werden, so dass beispielsweise trotz abgenutztem Stift 131 ein Anpressdruck des Stifts 131 auf das flächige Objekt identisch bleibt beziehungsweise der Stift 131 weiterhin das flächige Objekt 30 berührt. Alternativ kann auch vorgesehen sein, den Stift 131 zu ersetzen und den Läufer 100 dazu vom flächigen Objekt 30 zu entfernen.

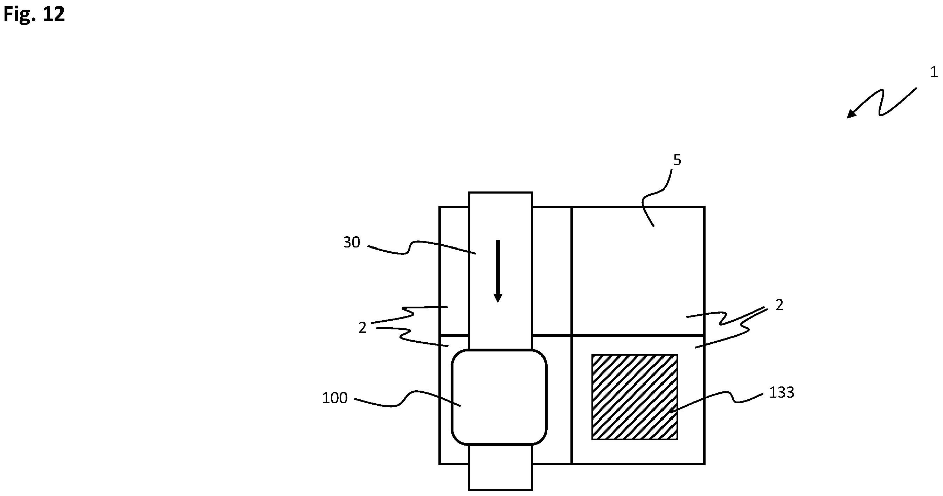

Figur 12 zeigt eine Draufsicht auf ein Planarantriebssystem 1, bei dem der Läufer 100 einen Stempel aufweist, und mit dem ein flächiges Objekt 30 bearbeitet werden kann. Auf der Statorfläche 5 ist ein Stempelbett 133 angeordnet, wobei der Stempel des Läufers 100 in regelmäßigen Abständen neue Stempelfarbe vom Stempelbett 133 aufnimmt.

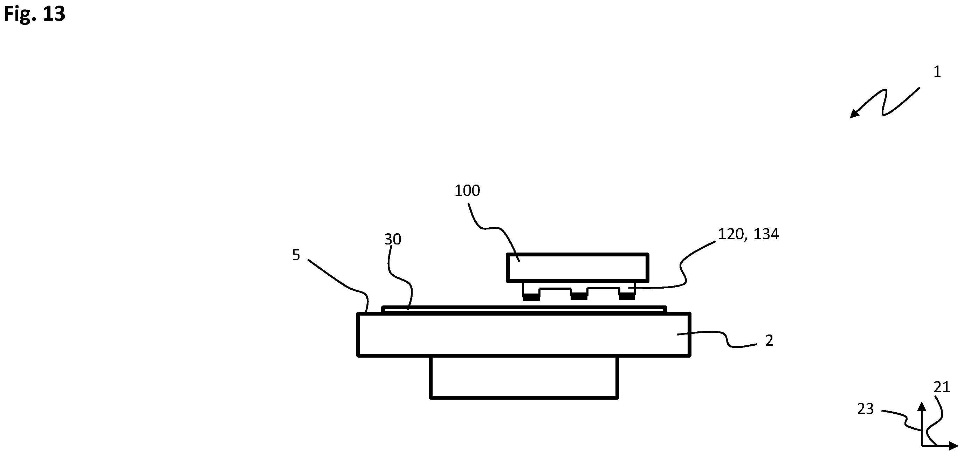

Figur 13 zeigt eine Seitenansicht des Planarantriebssystems 1 der Figur 12. Das Werkzeug 120, hier der Stempel 134, ist wieder zwischen dem Läufer 100 und dem flächigen Objekt 30 angeordnet. Das flächige Objekt 30 der Figur 12 und 13 kann dabei ein durchlaufendes Material, beispielsweise Papier oder eine Folie, umfassen. Dabei kann es insbesondere vorteilhaft sein, wenn sich das durchlaufende Material des flächigen Objekts und der Läufer 100 mit dem Stempel 134 synchron bewegen, also mit einer aufeinander abgestimmten Geschwindigkeit. Dadurch kann der Stempel 134 Farbe vom Stempelbett 133 auf das flächige Objekt 30 übertragen, ohne dass das flächige Objekt 30 angehalten werden muss. Dies ermöglicht ein effizienteres Verfahren, da die Spulengruppen 4 derart bestromt werden können, dass sich der Läufer 100 synchron zum flächigen Objekt bewegt.

Ist die im Stempelbett 133 vorhandene Farbe teilweise verbraucht, kann vorgesehen sein, dass der Läufer 100 mit dem Stempel 134 mit einer größeren Kraft auf das Stempelbett 133 gedrückt wird und so genauso viel Farbe auf des Stempel 134 übertragen wird als bei mehr Farbe im Stempelbett 133 und weniger Krafteinwirkung. Die Kraft, mit der der Stempel 134 auf das Stempelbett 133 gedrückt wird kann also an die im Stempelbett 133 vorhandene Farbmenge angepasst werden. Ferner kann alternativ vorgesehen sein, dass wenn weniger Farbe auf dem Stempel 134 vorhanden ist, beispielsweise aufgrund weniger Farbe im Stempelbett 133 oder weil bereits ein Stempelabdruck übertragen wurde, der Stempel 134 mit einer größeren Kraft auf das flächige Objekt 30 gedrückt wird.

Analog zu Figur 3 können auch mehrere Stempel 134 am Läufer 100 vorgesehen sein. Dann kann der zu verwendende Stempel wie im Zusammenhang mit Figur 3 erläutert durch ein entsprechendes Verkippen des Läufers 100 ausgewählt werden.

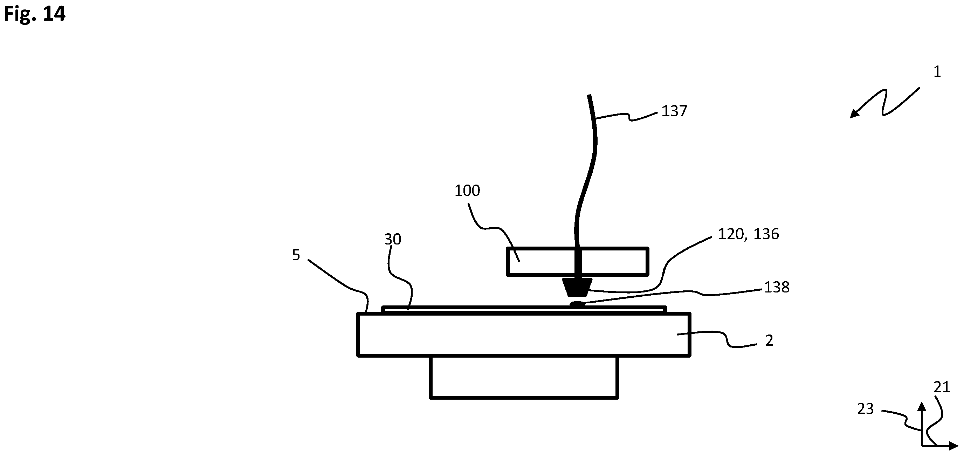

Figur 14 zeigt eine Seitenansicht eines Planarantriebssystems 1, mit dem ein flächiges Objekt 30 bearbeitet werden kann. Das Werkzeug 120 umfasst eine Klebstoffdüse 136. Das Bearbeiten des flächigen Objekts 30 umfasst ein Aufbringen eines Klebstoffes 138. Ferner ist die Klebstoffdüse 136 mit einer Klebstoffzufuhr 137 verbunden, mit der der Klebstoff 138 zur Verfügung gestellt werden kann. Durch ein Verkippen beziehungsweise Neigen des Läufers 100 können dabei auch schwierig erreichbare Stellen des flächigen Objekts 30 mit Klebstoff 138 benetzt werden. Das Übertragen des Klebstoffes 138 erfolgt dabei mittels mechanischen Kontaktes zwischen Werkzeug 120 und flächigem Objekt 30, wobei der Klebstoff 138 den mechanischen Kontakt herstellt.

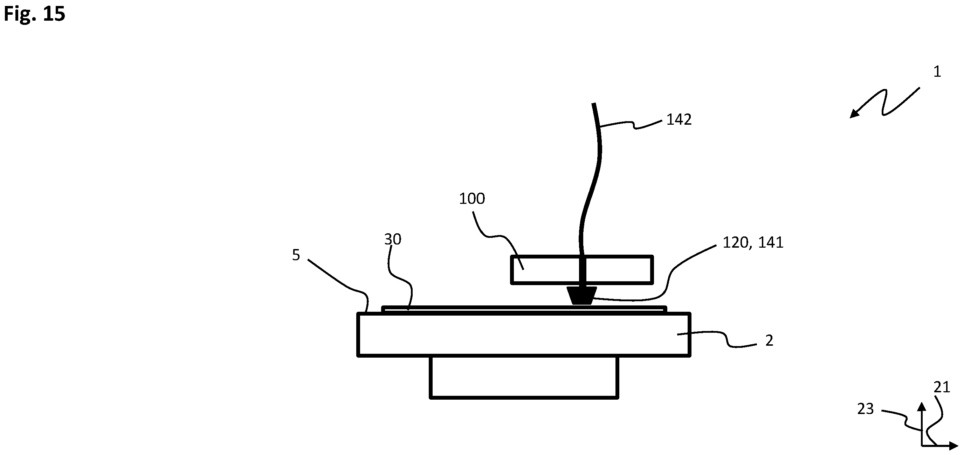

Figur 15 zeigt eine Seitenansicht eines Planarantriebssystems 1, mit dem ein flächiges Objekt 30 bearbeitet werden kann. Das Werkzeug 120 umfasst einen Druckkopf 141. Das Bearbeiten des flächigen Objekts 30 umfasst ein Drucken. Ferner ist der Druckkopf 141 mit einer Druckmaterialzufuhr 142 verbunden, mit der Druckmaterial zur Verfügung gestellt werden kann. Das Druckmaterial kann dabei Farbe, Pigmente, aber auch 3D-Druckmaterial sein. Das Übertragen des Druckmaterials erfolgt dabei mittels mechanischen Kontaktes zwischen Werkzeug 120 und flächigem Objekt 30, wobei das Druckmaterial den mechanischen Kontakt herstellt.

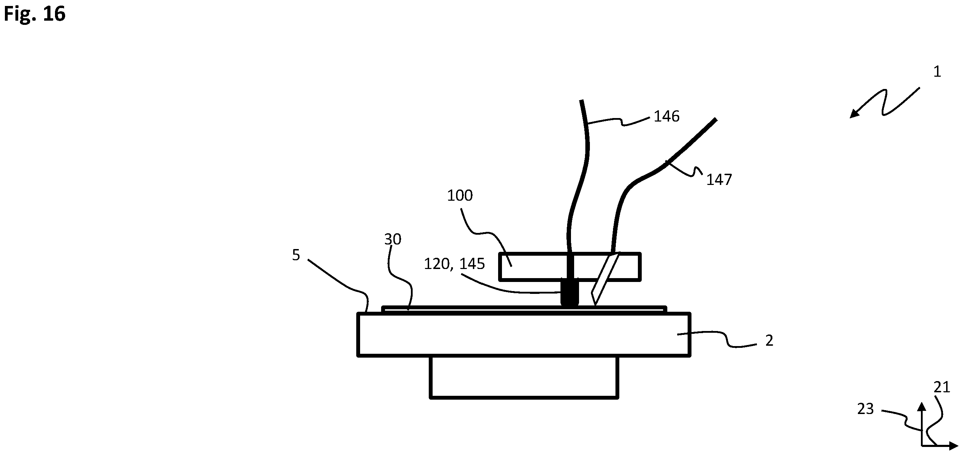

Figur 16 zeigt eine Seitenansicht eines Planarantriebssystems 1, mit dem ein flächiges Objekt 30 bearbeitet werden kann. Das Werkzeug 120 umfasst ein angetriebenes Werkzeug 145 und das Bearbeiten des flächigen Objekts 30 umfasst ein Bohren und/oder Fräsen und/oder Gravieren und/oder Sägen und/oder Schleifen du/oder Perforieren. Insbesondere kann das angetriebene Werkzeug 145 einen pneumatischen Antrieb und/oder einen hydraulischen Antrieb und oder einen elektrischen Antrieb aufweisen. Im Falle des elektrischen Antriebs kann das angetriebene Werkzeug 145 als Elektrowerkzeug bezeichnet werden. Das angetriebene Werkzeug 145 kann ein schnelldrehendes Multifunktionswerkzeug umfassen. Schnelldrehend kann dabei bedeuten, dass das Multifunktionswerkzeug eine Rotationsgeschwindigkeit von mehr als fünfhundert Umdrehungen pro Minute aufweisen kann. Ein solches Multifunktionswerkzeug kann einen Werkzeugkopf mit Schneidkanten umfassen, mit denen ein Bearbeiten des flächigen Objekts 30 erfolgen kann. Ferner ist ein Stromkabel zur Versorgung des Elektrowerkzeugs 145 und eine Absaugung 147 zum Absaugen von Splittern oder Stauben vorgesehen. Es kann vorgesehen sein, dass die Absaugung 147 entgegen der Darstellung in Figur 16 an einem weiteren Läufer 100 angeordnet ist.

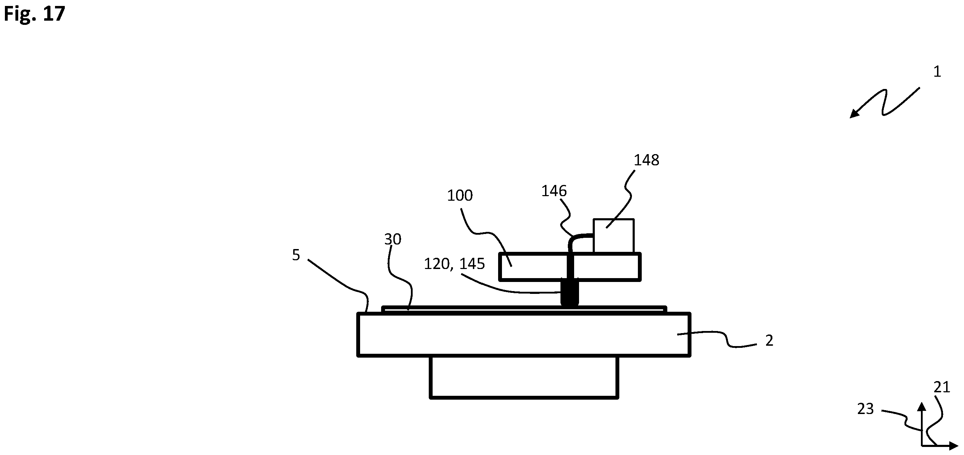

Figur 17 zeigt eine Seitenansicht eines Planarantriebssystems 1, das dem Planarantriebssystem 1 der Figur 16 entspricht, sofern im Folgenden keine Unterschiede beschrieben sind. Es ist keine Absaugung vorgesehen. Dafür weist der Läufer 100 einen Akkumulator 148 auf, der mit dem Stromkabel 146 mit dem angetriebenen Werkzeug 145 verbunden ist. So kann eine elektrische Versorgung des angetriebenen Werkzeugs 145 erreicht werden.

In den Figuren 16 und 17 ist das angetriebene Werkzeug 145 mittig am Läufer angeordnet. Selbstverständlich kann das angetriebene Werkzeug 145 auch an einer anderen Position, beispielsweise am Rand, angeordnet sein.

In den Ausführungsbeispielen der Figuren 11 bis 17 können ebenfalls die im Zusammenhang mit den Figuren 4 bis 6 erläuterten Fixierungsläufer 115 und/oder die im Zusammenhang mit den Figuren 9 und 10 erläuterten Kraftverstärkungsläufer 116 verwendet werden.

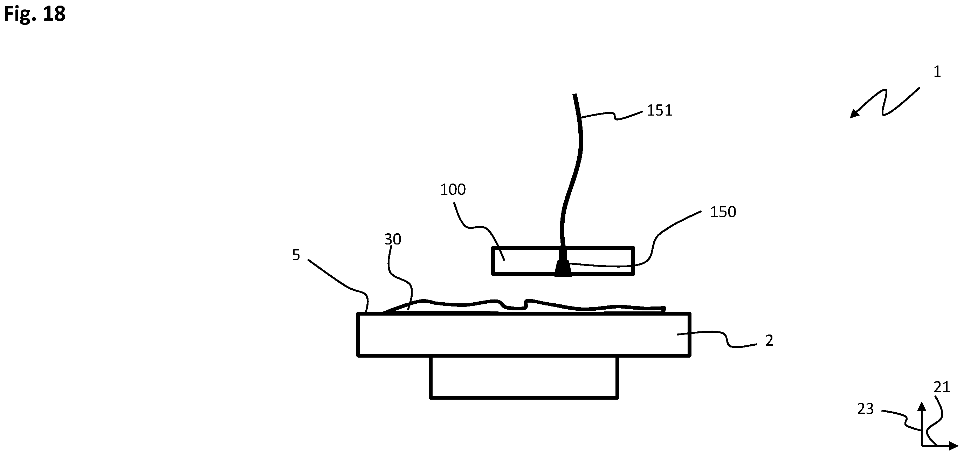

Figur 18 zeigt eine Seitenansicht eines Planarantriebssystems 1. Am Läufer 100 ist eine Kamera 150 mit einer Daten- und Energieübertragung 151 angeordnet, wobei die Daten- und Energieübertragung 151 drahtgebunden, also als Kabel, gezeigt ist, jedoch auch eine drahtlose Verbindung sein kann. Ferner kann die Energieübertragung kabelgebunden und die Datenübertragung kabellos ausgestaltet sein. Mittels der Kamera 150 kann eine Qualitätsprüfung erfolgen. Ferner kann mittels der Kamera 150 ein auf dem flächigen Objekt 30 angebrachter 2S-Code, beispielsweise ein QR-Code, ausgelesen werden, wobei der QR-Code Informationen über eine Dicke und/oder eine magnetische Permeabilität des flächigen Materials 30 umfassen kann. Die Kamera 150 kann ferner zur Erfassung von großflächigen Bildern oder zum Erfassen optischer Merkmale des flächigen Objekts 30 wie beispielsweise von Begrenzungspunkten dienen. Entgegen der Darstellung der Figur 18, bei der die Kamera 150 mittig am Läufer 100 platziert ist, kann die Kamera 150 auch an einer anderen Position, beispielsweise am Rand, angeordnet sein.

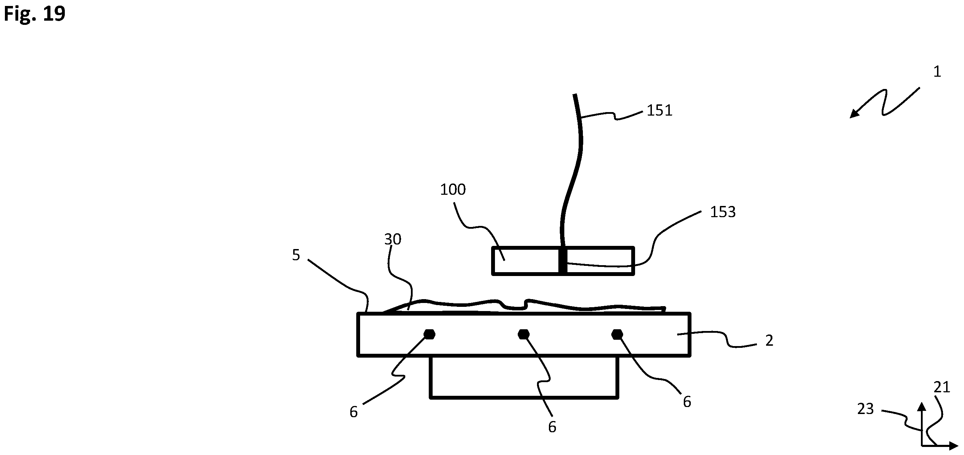

Figur 19 zeigt eine Seitenansicht eines Planarantriebssystems 1. Am Läufer 100 ist ein Sensor 153 mit einer Daten- und Energieübertragung 151 angeordnet. Der Läufer 100 und damit auch der Sensor 153 können an beliebige Stellen der Statorfläche 5 bewegt werden. Der Sensor 153 kann verwendet werden, um eine Temperatur des flächigen Objekts 30, eine Rauigkeit beziehungsweise Ebenheit des flächigen Objekts 30, eine Elastizität des flächigen Objekts 30, eine Dicke des flächigen Objekts 30 und/oder eine magnetische Permeabilität des flächigen Objekts 30 zu bestimmen. Der Sensor 153 kann ferner ein kapazitiver Sensor sein. Die Dicke des flächigen Objekts 30 und/oder die magnetische Permeabilität des flächigen Objekts 30 können alternativ oder zusätzlich mittels der Magnetfeldsensoren 6 bestimmt werden. Die Daten- und Energieübertragung 151 ist drahtgebunden, also als Kabel, gezeigt, kann jedoch auch eine drahtlose Verbindung sein. Ferner kann die Energieübertragung kabelgebunden und die Datenübertragung kabellos ausgestaltet sein.

Alle für die Bearbeitung des flächigen Objekts 30 relevanten Parameter (beispielsweise Dicke, Werkzeughöhe, Material) können von einem Bediener des Planarantriebssystems über einen Parameter vorgegeben werden. Somit kann festgelegt werden, in welcher Höhe sich der Läufer 100 mit dem Werkzeug 120 bewegen muss, um eine Positionierung des Läufers 100 ohne Bearbeitung vorzunehmen, wie weit der Läufer 100 für eine Bearbeitung des flächigen Objekts 30 abgesenkt werden muss und mit welcher Kraft der Läufer 100 das flächige Objekt 30 bearbeiten muss. Dies kann beispielsweise der Steuereinheit 25 vorgegeben werden.

Die Dicke des flächigen Objekts 30 kann automatisch bestimmt werden. Hierzu wird ein Prozess zur Dickenbestimmung gestartet, bei dem der Läufer 100 auf maximale Höhe gebracht wird, um zu erreichen, dass er das flächige Objekt 30 nicht berührt, und sich anschließend langsam absenkt. Der Läufer 100 wird dabei mit einer Positionsregelung bewegt. Das bedeutet, dass wenn der Läufer 100 beziehungsweise das Werkzeug 120 beginnt, das flächige Objekt 30 zu berühren, ein mechanischer Widerstand auftritt, dadurch ein Positionsfehler größer wird und dadurch eine größere Kraft gestellt werden muss. Dies kann dann ausgewertet werden dahingehend, dass sich Werkzeug 120 beziehungsweise Läufer 100 und flächiges Objekt 30 nun berühren. Wenn sich die Kraft erhöht, wird also davon ausgegangen, dass die Berührung stattgefunden hat. Da über die Magnetfeldsensoren 6 auch eine Position des Läufers 100 zu diesem Zeitpunkt bekannt ist, kann so die Dicke des Materials des flächigen Objekts 30 ermittelt werden. Es kann vorgesehen sein, dass der Läufer 100 dazu eine Nadel umfasst, wobei der mechanische Kontakt zwischen flächigem Objekt 30 und Läufer 100 mittels der Nadel hergestellt wird.

Wenn das flächige Objekt 30 unterschiedlich dick ist an unterschiedlichen Stellen, also Höhen und Tiefen aufweist, ist eine einmalige Bestimmung der Dicke nicht unbedingt zielführend. In diesem Fall kann beispielsweise der im Zusammenhang mit Figur 19 erläuterte Läufer 100 mit Sensor 153 zum Einsatz kommen, wobei der Sensor 153 als Abstandssensor (kapazitiv, induktiv) ausgestaltet sein kann. Alternativ kann der Sensor 153 zur Laserentfernungsmessung ausgestaltet sein. Der Sensor 153 kann dabei Daten an die Steuereinheit 25 übermitteln. Die Daten des Sensors 153 können dann direkt zur Vorgabe der Höhe des Läufers 100 verwendet werden.

Alternativ kann die Oberfläche des flächigen Objekts 30 auch in der Gesamtheit über ein komplett externes System vermessen werden, z.B. ein Kamerasystem, dass die ganze Materialoberfläche auf einmal erfasst und so ein Höhenprofil erstellen kann.

Bei fast allen Bearbeitungsprozessen ist das Werkzeug 120 unter dem Läufer 100 oder seitlich am Läufer 100 angebracht. Informationen über das Werkzeug 120 und insbesondere, wie dieses geometrisch am Läufer 100 angeordnet ist und welchen Überstand es zum Läufer 100 hat, können über das Einstellen von Parametern bei der Berechnung der vorgegebenen Höhe berücksichtigt werden.

Dadurch, dass die Dicke des flächigen Objekts 30 und den Überstand des Werkzeugs 120 zum Läufer bekannt sind, kann die vorgegebene Höhe so gewählt werden, dass zwar das flächige Objekt 30 bearbeitet wird, nicht aber das Statormodul 2 vom Werkzeug 120 berührt wird. Zusätzlich kann eine mechanische Schutzschicht, z.B. ein dünnes Edelstahlblech, auf den Statormodul 2 angeordnet werden.

### Bezugszeichenliste

- 1: Planarantriebssystem
- 2: Statormodul
- 3: Statoreinheit
- 4: Spulengruppe
- 5: Statorfläche
- 6: Magnetfeldsensor
- 7: Gehäuse
- 10: Steuereinheit
- 11: Datenleitung
- 21: erste Richtung
- 22: zweite Richtung
- 23: dritte Richtung
- 25: Steuereinheit
- 30: flächiges Objekt
- 100: Läufer
- 101: weiterer Läufer
- 105: Magneteinheit
- 111: erste Seite
- 112: zweite Seite
- 115: Fixierungsläufer
- 116: Krafterhöhungsläufer
- 117: Kraftübertragungseinheit
- 120: Werkzeug
- 121: Schneidwerkzeug
- 122: erste Schneide
- 123: zweite Schneide
- 128: Stanzwerkzeug
- 131: Stift
- 133: Stempelbett
- 134: Stempel
- 136: Klebstoffdüse
- 137: Klebstoffzufuhr
- 138: Klebstoff
- 141: Druckkopf
- 142: Druckmaterialzufuhr
- 145: angetriebenes Werkzeug
- 146: Stromkabel
- 147: Absaugung
- 148: Akkumulator
- 150: Kamera
- 151: Daten- und Energieübertragung
- 153: Sensor

## Patentansprüche

1. Verfahren zum Bearbeiten eines flächigen Objekts (30) mittels eines Planarantriebssystems (1), wobei das Planarantriebssystem (1) zumindest eine Statoreinheit (3) mit jeweils einer Mehrzahl von Spulengruppen (4) zum Erzeugen eines Statormagnetfelds, eine Statorfläche (5) oberhalb der Statoreinheit (3), sowie einen Läufer (100) umfasst, wobei der Läufer (100) eine Mehrzahl von Magneteinheiten (105) zum Erzeugen eines Läufermagnetfelds aufweist, wobei der Läufer (100) oberhalb der Statorfläche (5) mittels einer Wechselwirkung des Statormagnetfelds mit dem Läufermagnetfeld in einer ersten Richtung (21) und/oder einer zweiten Richtung (22) und/oder einer dritten Richtung (23) bewegbar ist, wobei die erste Richtung (21) und die zweite Richtung (22) parallel zur Statorfläche (5) sind, wobei der Läufer (100) in der dritten Richtung (23) senkrecht zur Statorfläche (5) bewegbar ist, wobei ein Werkzeug (120) am Läufer (100) angeordnet ist, wobei das flächige Objekt (30) zwischen der Statorfläche (5) und dem Läufer (100) angeordnet ist, mit den folgenden Schritten:
- Bestromen der Spulengruppen (4) derart, dass der Läufer (100) in der dritten Richtung (23) eine vorgegebene Höhe über der Statorfläche (5) aufweist;
- Bestromen der Spulengruppen (4) derart, dass sich der Läufer (100) auf einer vorgegebenen Trajektorie bewegt, wobei dabei das Werkzeug (120) und das flächige Objekt (30) in mechanischem Kontakt stehen und dadurch das flächige Objekt (30) bearbeitet wird.

2. Verfahren nach Anspruch 1, wobei beim Bestromen der Spulengruppen (4) derart, dass der Läufer (100) in der dritten Richtung (23) eine vorgegebene Höhe über der Statorfläche (5) aufweist eine magnetische Permeabilität des flächigen Objekts (30) berücksichtigt wird.

3. Verfahren nach Anspruch 2, wobei eine Stromstärke der Spulengruppen (4) anhand der magnetischen Permeabilität des flächigen Objekts (30) angepasst wird.

4. Verfahren nach einem der Ansprüche 1 bis 3, wobei zunächst die Spulengruppen (4) derart bestromt werden, dass sich der Läufer (100) in der dritten Richtung (23) weg von der Statorfläche (5) bewegt, anschließend die Spulengruppen (4) derart bestromt werden, dass sich der Läufer (100) oberhalb des flächigen Objekts (30) befindet und anschließend die Spulengruppen (4) derart bestromt werden, dass sich der Läufer (100) in der dritten Richtung (23) hin zur Statorfläche (5) bewegt, bis das Werkzeug (120) und das flächige Objekt (30) in mechanischem Kontakt stehen.

5. Verfahren nach einem der Ansprüche 1 bis 4, wobei das Bestromen der Spulengruppen (4) derart, dass sich der Läufer (100) auf einer vorgegebenen Trajektorie bewegt, derart erfolgt, dass für zumindest einen Punkt der Trajektorie eine vorgegebene Kraft mit einer ermittelten Kraft verglichen wird und die Bestromung der Spulengruppen (4) derart erfolgt, dass die ermittelte Kraft der vorgegebenen Kraft entspricht.

6. Verfahren nach einem der Ansprüche 1 bis 5, wobei eine Dicke des flächigen Objekts (30) in der dritten Richtung (23) ermittelt wird und die vorgegebene Höhe mittels der Dicke berechnet wird.

7. Verfahren nach Anspruch 6, wobei die Dicke des flächigen Objekts (30) in der dritten Richtung (23) mittels eines am Läufer (100) angeordneten Sensors (153) ermittelt wird.

8. Verfahren nach einem der Ansprüche 1 bis 7, wobei ein Fixierungsläufer (115) mittels der Spulengruppen (4) derart hin zur Statorfläche (5) bewegt wird, dass das flächige Objekt (30) an der Statorfläche (5) mittels des Fixierungsläufers (115) an einer Bewegung in der ersten Richtung (21) und/oder zweiten Richtung (22) und/oder dritten Richtung (23) eingeschränkt ist.

9. Verfahren nach einem der Ansprüche 1 bis 8, wobei ein Krafterhöhungsläufer (116) mittels zumindest einer Kraftübertragungseinheit (117) auf den Läufer (100) einwirkt, um eine Kraft des Werkzeugs (120) auf das flächige Objekt (30) in der dritten Richtung (23) zu erhöhen.

10. Verfahren nach einem der Ansprüche 1 bis 9, wobei das Werkzeug (120) ein Schneidwerkzeug (121) aufweist und das Bearbeiten des flächigen Objekts (30) ein Schneiden umfasst.

11. Verfahren nach Anspruch 10, wobei das Schneidwerkzeug (121) eine erste Schneide (122) und zumindest eine zweite Schneide (123) aufweist, wobei die erste Schneide (122) an einer erste Seite (111) des Läufers (100) und die zweite Schneide (123) an einer zweiten Seite (112) des Läufers (100) angeordnet ist, wobei die erste Seite (111) und die zweite Seite (112) des Läufers (100) einander gegenüberliegen, wobei der Läufer (100) zum Bearbeiten des flächigen Objekts (30) schräg gestellt werden kann derart, dass die erste Schneide (122) und/oder die zweite Schneide (123) mit dem flächigen Objekt (30) in mechanischem Kontakt steht.

12. Verfahren nach einem der Ansprüche 1 bis 11, wobei das Werkzeug (120) ein Stanzwerkzeug (128) aufweist und das Bearbeiten des flächigen Objekts (30) ein Stanzen umfasst, und/ oder wobei das Werkzeug (120) einen Stempel (134) aufweist, wobei ein Stempelbett (133) auf der Statorfläche (5) angeordnet ist und das Bearbeiten des flächigen Objekts (30) ein Stempeln umfasst, und/ oder das Werkzeug einen Drucckopf (141) umfasst und das Bearbeiten des flächigen Objekts (30) ein Drucken umfasst, und/ oder wobei das Werkzeug (120) eine Klebstoffdüse (136) umfasst und das Bearbeiten des flächigen Objekts (30) ein Aufbringen eines Klebstoffes (138) umfasst, und/ oder wobei das Werkzeug eine Walze umfasst und das Bearbeiten des flächigen Objekts (30) ein Walzen umfasst, und/oder wobei das Werkzeug eine Presse umfasst und das Bearbeiten des flächigen Objekts (30) ein Pressen umfasst, und/ oder wobei das Werkzeug (120) einen Stift (131) umfasst und das Bearbeiten des flächigen Objekts (30) ein Schreiben oder Zeichnen umfasst, und/ oder wobei das Werkzeug ein angetriebenes Werkzeug (145) umfasst und das Bearbeiten des flächigen Objekts (30) ein Bohren und/oder Fräsen und/oder Gravieren und/oder Sägen und/oder Schleifen und/oder Perforieren umfasst.

13. Planarantriebssystem (1) mit zumindest einer Statoreinheit (3) mit jeweils einer Mehrzahl von Spulengruppen (4) zum Erzeugen eines Statormagnetfelds, einer Statorfläche (5) oberhalb der Statoreinheit (3), sowie einem Läufer (100), wobei der Läufer (100) eine Mehrzahl von Magneteinheiten (105) zum Erzeugen eines Läufermagnetfelds aufweist, wobei der Läufer (100) oberhalb der Statorfläche (5) mittels einer Wechselwirkung des Statormagnetfelds mit dem Läufermagnetfeld in einer ersten Richtung (21) und/oder einer zweiten Richtung (22) und/oder einer dritten Richtung (23) bewegbar ist, wobei die erste Richtung (21) und die zweite Richtung (22) parallel zur Statorfläche (5) sind, wobei der Läufer (100) in der dritten Richtung (23) senkrecht zur Statorfläche (5) bewegbar ist, wobei ein Werkzeug am Läufer angeordnet ist, ferner aufweisend eine Steuereinheit, die eingerichtet ist, ein erstes Signal auszugeben, wobei anhand des ersten Signals die Spulengruppen (4) derart bestromt werden, dass der Läufer (100) in der dritten Richtung (23) eine vorgegebene Höhe über der Statorfläche (5) aufweist, und ferner ein zweites Signal auszugeben, wobei anhand des zweiten Signals die Spulengruppen (4) derart bestromt werden, dass sich der Läufer (100) auf einer vorgegebenen Trajektorie bewegt, wobei dabei das Werkzeug und ein flächiges Objekt (30) in mechanischem Kontakt stehen und dadurch das flächige Objekt (30) bearbeitet wird.

## Claims

1. A method for processing a planar object (30) with the aid of a planar drive system (1), the planar drive system (1) comprising at least a stator assembly (3) comprising in each case a plurality of coil groups (4) for generating a stator magnetic field, a stator surface (5) above the stator assembly (3), and a rotor (100), the rotor (100) comprising a plurality of magnet units (105) for generating a rotor magnetic field, the rotor (100) being movable above the stator surface (5) with the aid of an interaction of the stator magnetic field with the rotor magnetic field in a first direction (21) and/or a second direction (22) and/or a third direction (23), wherein the first direction (21) and the second direction (22) are parallel to the stator surface (5), wherein the rotor (100) is movable in the third direction (23) perpendicular to the stator surface (5), wherein a tool (120) is arranged at the rotor (100), wherein the planar object (30) is arranged between the stator surface (5) and the rotor (100), the method comprising the following steps:
- energizing the coil groups (4) in such a way that the rotor (100) comprises a predetermined height above the stator surface (5) in the third direction (23);
- energizing the coil groups (4) in such a way that the rotor (100) moves along a predetermined trajectory, wherein the tool (120) and the planar object (30) are in mechanical contact, thereby processing the planar object (30).

2. The method according to claim 1, wherein when energizing the coil groups (4) in such a way that the rotor (100) has a predetermined height above the stator surface (5) in the third direction (23), a magnetic permeability of the planar object (30) is taken into account.

3. The method according to claim 2, wherein a current intensity of the coil groups (4) is adjusted based on the magnetic permeability of the planar object (30).

4. The method according to any one of claims 1 to 3, wherein at first the coil groups (4) are energized in such a way that the rotor (100) moves in the third direction (23) away from the stator surface (5), then the coil groups (4) are energized in such a way that the rotor (100) is located above the planar object (30), and then the coil groups (4) are energized in such a way that the rotor (100) moves in the third direction (23) towards the stator surface (5) until the tool (120) and the planar object (30) are in mechanical contact.

5. The method according to any one of claims 1 to 4, wherein energizing the coil groups (4) in such a way that the rotor (100) moves along a predetermined trajectory is carried out in such a way that for at least one point of the trajectory a predetermined force is compared to a determined force, and energizing the coil groups (4) is carried out in such a way that the determined force corresponds to the predetermined force.

6. The method according to any one of claims 1 to 5, wherein a thickness of the planar object (30) in the third direction (23) is determined and the predetermined height is calculated using the thickness.

7. The method according to claim 6, wherein the thickness of the planar object (30) in the third direction (23) is determined with the aid of a sensor (153) arranged at the rotor (100).

8. The method according to any one of claims 1 to 7, wherein a fixation rotor (115) is moved towards the stator surface (5) with the aid of the coil groups (4) in such a way that the planar object (30) at the stator surface (5) is restricted from moving in the first direction (21) and/or second direction (22) and/or third direction (23) with the aid of the fixation rotor (115).

9. The method according to any one of claims 1 to 8, wherein a force-increasing rotor (116) acts upon the rotor (100) with the aid of at least one force-transmitting unit (117) to increase a force of the tool (120) on the planar object (30) in the third direction (23).

10. The method according to any one of claims 1 to 9, wherein the tool (120) comprises a cutting tool (121) and processing the planar object (30) comprises cutting.

11. The method according to claim 10, wherein the cutting tool (121) comprises a first cutting edge (122) and at least one second cutting edge (123), wherein the first cutting edge (122) is arranged on a first side (111) of the rotor (100) and the second cutting edge (123) is arranged on a second side (112) of the rotor (100), wherein the first side (111) and the second side (112) of the rotor (100) are opposite to each other, wherein the rotor (100) may be tilted for processing the planar object (30) in such a way that the first cutting edge (122) and/or the second cutting edge (123) are in mechanical contact with the planar object (30).

12. The method according to any one of claims 1 to 11, wherein the tool (120) comprises a punching tool (128) and the processing of the planar object (30) comprises punching, and/or wherein the tool (120) comprises a stamp (134), wherein a stamp bed (133) is arranged on the stator surface (5), and wherein processing the planar object (30) comprises stamping, and/or wherein the tool comprises a print head (141) and the processing of the planar object (30) comprises printing, and/or wherein the tool (120) comprises an adhesive-dispensing nozzle (136) and the processing of the planar object (30) comprises applying an adhesive (138), and/or wherein the tool comprises a roller and the processing of the planar object (30) comprises rolling, and/or wherein the tool comprises a press and the processing of the planar object (30) comprises pressing, and/or wherein the tool (120) comprises a pen (131) and the processing of the planar object (30) comprises writing or drawing, and/or wherein the tool comprises a driven tool (145) and the processing of the planar object (30) comprises drilling and/or milling and/or engraving and/or sawing and/or grinding and/or perforating.

13. A planar drive system (1) having at least a stator assembly (3) respectively comprising a plurality of coil groups (4) for generating a stator magnetic field, a stator surface (5) above the stator assembly (3), and a rotor (100), the rotor (100) comprising a plurality of magnet units (105) for generating a rotor magnetic field, the rotor (100) being movable above the stator surface (5) with the aid of an interaction of the stator magnetic field with the rotor magnetic field in a first direction (21) and/or a second direction (22) and/or a third direction (23), wherein the first direction (21) and the second direction (22) are parallel to the stator surface (5), wherein the rotor (100) is movable in the third direction (23) perpendicular to the stator surface (5), wherein a tool is arranged at the rotor, further comprising a controller which is set up to output a first signal, wherein on the basis of the first signal the coil groups (4) are energized in such a way that the rotor (100) has a predetermined height above the stator surface (5) in the third direction (23) and furthermore to output a second signal, wherein on the basis of the second signal the coil groups (4) are energized in such a way that the rotor (100) moves on a predetermined trajectory, wherein the tool and a planar object (30) are in mechanical contact in the process and the planar object (30) is processed as a result.

## Revendications

1. Procédé de traitement d'un objet plat (30) au moyen d'un système d'entraînement planaire (1), le système d'entraînement planaire (1) comprenant au moins une unité de stator (3) avec respectivement une pluralité de groupes de bobines (4) pour générer un champ magnétique de stator, une surface de stator (5) au-dessus de l'unité de stator (3), ainsi qu'un rotor (100), le rotor (100) présentant une pluralité d'unités magnétiques (105) pour générer un champ magnétique de rotor, le rotor (100) pouvant être déplacé au-dessus de la surface de stator (5) au moyen d'une interaction du champ magnétique de stator avec le champ magnétique de rotor dans une première direction (21) et/ou une deuxième direction (22) et/ou une troisième direction (23), la première direction (21) et la deuxième direction (22) étant parallèles à la surface de stator (5), le rotor (100) pouvant être déplacé dans la troisième direction (23) perpendiculairement à la surface de stator (5), un outil (120) étant agencé sur le rotor (100), l'objet plat (30) étant agencé entre la surface de stator (5) et le rotor (100), avec les étapes suivantes :
- l'alimentation en courant des groupes de bobines (4) de telle sorte que le rotor (100) présente une hauteur prédéfinie au-dessus de la surface de stator (5) dans la troisième direction (23) ;
- l'alimentation en courant des groupes de bobines (4) de telle sorte que le rotor (100) se déplace selon une trajectoire prédéfinie, l'outil (120) et l'objet plat (30) étant alors en contact mécanique, et l'objet plat (30) étant ainsi traité.

2. Procédé selon la revendication 1, dans lequel une perméabilité magnétique de l'objet plat (30) est prise en compte lors de l'alimentation des groupes de bobines (4) de telle sorte que le rotor (100) présente une hauteur prédéfinie au-dessus de la surface de stator (5) dans la troisième direction (23).

3. Procédé selon la revendication 2, dans lequel une intensité de courant des groupes de bobines (4) est adaptée à l'aide de la perméabilité magnétique de l'objet plat (30).

4. Procédé selon l'une quelconque des revendications 1 à 3, dans lequel tout d'abord les groupes de bobines (4) sont alimentés en courant de telle sorte que le rotor (100) s'éloigne de la surface de stator (5) dans la troisième direction (23), puis les groupes de bobines (4) sont alimentés en courant de telle sorte que le rotor (100) se trouve au-dessus de l'objet plat (30), puis les groupes de bobines (4) sont alimentés en courant de telle sorte que le rotor (100) se déplace dans la troisième direction (23) vers la surface de stator (5) jusqu'à ce que l'outil (120) et l'objet plat (30) soient en contact mécanique.

5. Procédé selon l'une quelconque des revendications 1 à 4, dans lequel l'alimentation en courant des groupes de bobines (4) de telle sorte que le rotor (100) se déplace selon une trajectoire prédéfinie est réalisée de manière à comparer, pour au moins un point de la trajectoire, une force prédéfinie à une force déterminée et l'alimentation en courant des groupes de bobines (4) est réalisée de manière à ce que la force déterminée corresponde à la force prédéfinie.

6. Procédé selon l'une quelconque des revendications 1 à 5, dans lequel une épaisseur de l'objet plat (30) dans la troisième direction (23) est déterminée et la hauteur prédéfinie est calculée au moyen de l'épaisseur.

7. Procédé selon la revendication 6, dans lequel l'épaisseur de l'objet plat (30) dans la troisième direction (23) est déterminée au moyen d'un capteur (153) agencé sur le rotor (100).

8. Procédé selon l'une quelconque des revendications 1 à 7, dans lequel un rotor de fixation (115) est déplacé vers la surface de stator (5) au moyen des groupes de bobines (4) de telle sorte que l'objet plat (30) sur la surface de stator (5) est limité dans son déplacement dans la première direction (21) et/ou la deuxième direction (22) et/ou la troisième direction (23) au moyen du rotor de fixation (115).

9. Procédé selon l'une quelconque des revendications 1 à 8, dans lequel un rotor d'augmentation de force (116) agit sur le rotor (100) au moyen d'au moins une unité de transmission de force (117) pour augmenter une force de l'outil (120) sur l'objet plat (30) dans la troisième direction (23).

10. Procédé selon l'une quelconque des revendications 1 à 9, dans lequel l'outil (120) présente un outil de coupe (121) et le traitement de l'objet plat (30) comprend une coupe.

11. Procédé selon la revendication 10, dans lequel l'outil de coupe (121) présente une première lame (122) et au moins une deuxième lame (123), la première lame (122) étant agencée sur un premier côté (111) du rotor (100) et la deuxième lame (123) étant agencée sur un deuxième côté (112) du rotor (100), le premier côté (111) et le deuxième côté (112) du rotor (100) étant opposés l'un à l'autre, le rotor (100) pouvant être incliné pour traiter l'objet plat (30) de telle sorte que la première lame (122) et/ou la deuxième lame (123) soit en contact mécanique avec l'objet plat (30).

12. Procédé selon l'une quelconque des revendications 1 à 11, dans lequel l'outil (120) présente un outil d'estampage (128) et le traitement de l'objet plat (30) comprend un estampage, et/ou dans lequel l'outil (120) présente un poinçon (134), un lit de poinçon (133) étant agencé sur la surface de stator (5) et le traitement de l'objet plat (30) comprenant un poinçonnage, et/ou l'outil comprend une tête de pression (141) et le traitement de l'objet plat (30) comprend une pression, et/ou dans lequel l'outil (120) comprend une buse d'adhésif (136) et le traitement de l'objet plat (30) comprend une application d'un adhésif (138), et/ou dans lequel l'outil comprend un rouleau et le traitement de l'objet plat (30) comprend un laminage, et/ou dans lequel l'outil comprend une presse et le traitement de l'objet plat (30) comprend un pressage, et/ou dans lequel l'outil (120) comprend un stylo (131) et le traitement de l'objet plat (30) comprend une écriture ou un dessin, et/ou dans lequel l'outil comprend un outil entraîné (145) et le traitement de l'objet plat (30) comprend un perçage et/ou un fraisage et/ou une gravure et/ou un sciage et/ou un meulage et/ou une perforation.

13. Système d'entraînement planaire (1) avec au moins une unité de stator (3) avec respectivement une pluralité de groupes de bobines (4) pour générer un champ magnétique de stator, une surface de stator (5) au-dessus de l'unité de stator (3), ainsi qu'un rotor (100), le rotor (100) présentant une pluralité d'unités magnétiques (105) pour générer un champ magnétique de rotor, le rotor (100) pouvant être déplacé au-dessus de la surface de stator (5) au moyen d'une interaction du champ magnétique de stator avec le champ magnétique de rotor dans une première direction (21) et/ou une deuxième direction (22) et/ou une troisième direction (23), la première direction (21) et la deuxième direction (22) étant parallèles à la surface de stator (5), le rotor (100) pouvant être déplacé dans la troisième direction (23) perpendiculairement à la surface de stator (5), un outil étant agencé sur le rotor, présentant en outre une unité de commande qui est conçue pour émettre un premier signal, les groupes de bobines (4) étant alimentés en courant à l'aide du premier signal de telle sorte que le rotor (100) présente une hauteur prédéfinie au-dessus de la surface de stator (5) dans la troisième direction (23), et en outre pour émettre un deuxième signal, les groupes de bobines (4) étant alimentés en courant à l'aide du deuxième signal de telle sorte que le rotor (100) se déplace selon une trajectoire prédéfinie, l'outil et un objet plat (30) étant alors en contact mécanique et l'objet plat (30) étant ainsi traité.
